# EUROPEAN PATENT APPLICATION

(11) **EP 4 319 312 A1**
(43) Date of publication of application: **07.02.2024**
(21) Application number: 22189103.9
(22) Date of filing: 05.08.2022
(51) Int. Cl.: H04W 36/36, H04W 36/00, H04W 36/08

(54) **USER EQUIPMENT AND BASE STATIONS INVOLVED IN A CELL MOBILITY PROCEDURE**

(71) Applicant: Panasonic Intellectual Property Corporation of America, Torrance, CA 90504 (US)
(72) Inventor: TEO, Tiong Hou, 63225 Langen (DE); SUZUKI, Hidetoshi, 517-8501, Osaka (JP); LATHEEF, Fasil, 63225 Langen (DE)
(74) Representative: Grünecker Patent- und Rechtsanwälte PartG mbB

(57) **Abstract**

The present disclosure relates to a user equipment, UE, comprising the following. A receiver receives, from a source base station, an initial cell configuration of at least one candidate target cell, wherein each initial cell configuration comprises cell configuration parameters of a respective candidate target cell for performing a conditional cell mobility procedure and comprises an execution condition as to when to execute the conditional cell mobility procedure with said respective candidate target cell. A circuitry of the UE, when the execution condition for a target cell among the at least one candidate target cell is fulfilled, executes the conditional cell mobility procedure with said target cell, based on the cell configuration parameters of said target cell. The circuitry maintains the received initial cell configuration of the at least one candidate target cell, upon successful completion of the conditional cell mobility procedure between the UE and said target cell.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the new radio access technology - 5G NR (New Radio), which is also called fifth generation (5G) or NR and used interchangeably herein.

One objective is to provide a single technical framework addressing all usage scenarios, requirements and deployment scenarios (see e.g., section 6 of 3GPP TR 38.913 e.g., version 16.0.0 or version 17.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, while they are different in that the URLLC service may preferably require ultra-low latencies.

A second objective is to achieve forward compatibility, which facilitates a completely new system design and/or the introduction of novel features.

### SUMMARY

One non-limiting and exemplary embodiment facilitates providing procedures for a UE to perform improved cell mobility procedures.

In an embodiment, the techniques disclosed here feature a user equipment, UE, comprising the following. A receiver receives, from a source base station, an initial cell configuration of at least one candidate target cell, wherein each initial cell configuration comprises cell configuration parameters of a respective candidate target cell for performing a conditional cell mobility procedure and comprises an execution condition as to when to execute the conditional cell mobility procedure with said respective candidate target cell. A circuitry of the UE, when the execution condition for a target cell among the at least one candidate target cell is fulfilled, executes the conditional cell mobility procedure with said target cell, based on the cell configuration parameters of said target cell. The circuitry maintains the received initial cell configuration of the at least one candidate target cell, upon successful completion of the conditional cell mobility procedure between the UE and said target cell.

It should be noted that general or specific embodiments may be implemented as a system, a method, an integrated circuit, a computer program, a storage medium, or any selective combination thereof. For instance, an integrated circuit can control a process of a UE or base station.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which the improved procedures of the present disclosure may be applied;
- **Fig. 2**: is a schematic drawing that shows a functional split between NG Radio Access Network (NG-RAN) and 5G Core Network (5GC), to which the improved procedures of the present disclosure may be applied,
- **Fig. 3**: is a sequence diagram for Radio Resource Control (RRC) connection setup/reconfiguration procedures to which the improved procedures of the present disclosure may be applied,
- **Fig. 4**: is a schematic drawing showing usage scenarios of eMBB, mMTC and URLLC to which the improved procedures of the present disclosure may be applied,
- **Fig. 5**: is a block diagram showing an exemplary 3GPP NR system architecture for a non-roaming scenario,
- **Fig. 6**: illustrates an overview of different cell types in Dual Connectivity,
- **Fig. 7**: is a signaling diagram for a handover involving a UE, a source gNB and a target gNB,
- **Fig. 8**: illustrates an exemplary conditional handover involving a UE, a source gNB and a target gNB,
- **Fig. 9 and Fig. 10**: respectively illustrate other exemplary conditional handovers,
- **Fig. 11**: is a signaling diagram for a conditional PSCell change procedure,
- **Fig. 12**: is a signaling diagram for a conditional PSCell addition procedure,
- **Fig. 13**: illustrates an exemplary and simplified structure of a UE and a gNB,
- **Fig. 14**: illustrates a structure of the UE according to an exemplary implementation of the improved mobility procedure,
- **Fig. 15**: illustrates a flow diagram for the UE behavior according to an exemplary implementation of the improved mobility procedure ,
- **Fig. 16**: illustrates a structure of the source base station according to an exemplary implementation of the improved mobility procedure,
- **Fig. 17**: illustrates a flow diagram for the source base station behavior according to an exemplary implementation of the improved mobility procedure ,
- **Fig. 18**: illustrates a structure of the target base station according to an exemplary implementation of the improved mobility procedure,
- **Fig. 19**: illustrates a flow diagram for the target base station behavior according to an exemplary implementation of the improved mobility procedure ,
- **Fig. 20**: is a signaling diagram illustrating an exemplary exchange between the UE, the source gNB and the target gNB for an exemplary implementation of the improved mobility procedure, particularly improved CHO procedure ,
- **Fig. 21**: is a signaling diagram illustrating an exemplary exchange between the UE, the source gNB and the target gNB for a first implementation of the improved CHO procedure,
- **Fig. 22**: is a signaling diagram illustrating an exemplary exchange between the UE, the source gNB and the target gNB for a second implementation of the improved CHO procedure,
- **Fig. 23**: is a signaling diagram illustrating an exemplary exchange between the UE, the source gNB and the target gNB for a third implementation of the improved CHO procedure,
- **Fig. 24**: illustrates a signaling diagram illustrating an exemplary exchange between the UE, the source gNB and the target gNB for an exemplary implementation of the improved CPC procedure, and
- **Fig. 25**: illustrates a signaling diagram illustrating an exemplary exchange between the UE, the source gNB and the target gNB for an exemplary implementation of the improved CPA procedure.

### DETAILED DESCRIPTION

### 5G NR system architecture and protocol stacks

3GPP has been working at the next release for the 5^{th} generation cellular technology, simply called 5G, including the development of a new radio access technology operating in frequencies ranging up to 100 GHz. The first version of the 5G standard was completed at the end of 2017, which allows proceeding to 5G NR standard-compliant trials and commercial deployments of smartphones.

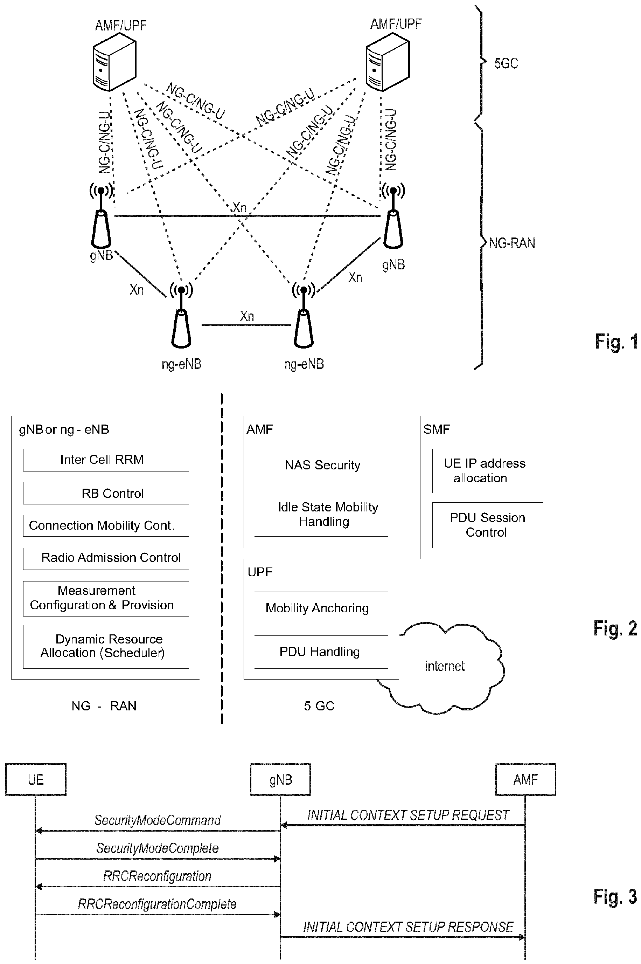

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the 5GC, more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in **Fig. 1** (see e.g., 3GPP TS 38.300 e.g., v16.8.0, section 4).

The user plane protocol stack for NR (see e.g., 3GPP TS 38.300, section 4.4.1) comprises the PDCP (Packet Data Convergence Protocol, see section 6.4 of 3GPP TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g., sub-clause 6.5 of TS 38.300). A control plane protocol stack is also defined for NR (see for instance TS 38.300, section 4.4.2). An overview of the Layer 2 functions is given in sub-clause 6 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15 kHz, 30 kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 e.g., v17.1.0, e.g., section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

### 5G NR functional split between NG-RAN and 5GC

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g., packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see 3GPP TS 38.300).

RRC is a higher layer signaling (protocol) used for UE and gNB configuration. In particular, this transition may involve that the AMF prepares the UE context data (including e.g., PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5GC is provided that comprises circuitry which, in operation, establishes a Next Generation (NG) connection with a gNodeB; and a transmitter which, in operation, transmits an initial context setup message, via the NG connection, to the gNodeB to cause a signaling radio bearer setup between the gNodeB and a user equipment (UE). In particular, the gNodeB transmits an RRC signaling containing a resource allocation configuration information element (IE) to the UE via the signaling radio bearer. The UE then performs an uplink transmission or a downlink reception based on the resource allocation configuration.

### Usage Scenarios of IMT for 2020 and beyond

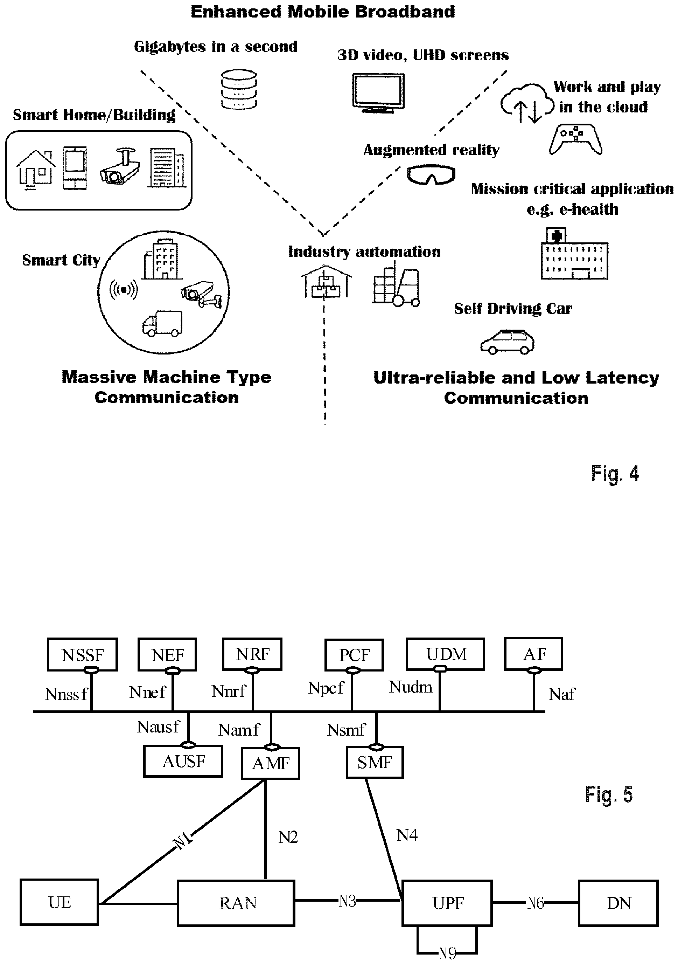

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g., ITU-R M.20183 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by 3GPP TR 38.913 version 16.0.0. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁶ level), higher availability, packet sizes of up to 256 bytes, time synchronization down to the order of a few µs where the value can be one or a few µs depending on frequency range and short latency in the order of 0.5 to 1 ms, in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also, PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g., as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see e.g., 3GPP TS 23.501 e.g., v16.9.0 or v17.4.0, section 4.2.3). An Application Function (AF), e.g., an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g., QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g., operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMBB and mMTC services to at least one of functions (for example NEF, AMF, SMF, PCF,UPF, etc.) of the 5GC to establish a PDU session including a radio bearer between a gNodeB and a UE in accordance with the QoS requirement and circuitry, which, in operation, performs the services using the established PDU session.

### Cell types in 5G NR

There are several types of cells in 5G NR, including PCell, SCell, PSCell, SpCell.

The PCell is the primary cell, which can be used to initiate the initial access.

The SCell is a secondary cell. A UE can be configured with one or more SCell in connected mode. An SCell can be activated or deactivated, e.g., according to traffic.

PSCell is closely connected to Dual Connectivity (DC). E-UTRAN supports Dual Connectivity (DC) operation whereby a multiple-Rx/Tx UE in RRC_CONNECTED can be configured to utilize radio resources provided by two distinct schedulers, located in two nodes (Master Node, Secondary Node) connected via a non-ideal backhaul over the X2 interface. The Master Node provides the control plane connection to the core network. The Secondary Node will not have a control plane connection to the core network, but will provide additional resources to the UE in case of MR-DC.

In Dual Connectivity, there are two groups of cells, a master cell group (MCG) and a secondary cell group (SCG). In the MCG, there can be one PCell and one or more SCell. In the SCG, there can be one PSCell and one or more SCell. The UE performs the initial access under the SCG via the PSCell. Because most signaling messages are sent only on the PCell and the PSCell, 3GPP also defines the concept of a SpCell (Special cell) for ease of description, which is to be understood as SpCell = PCell + PSCell.

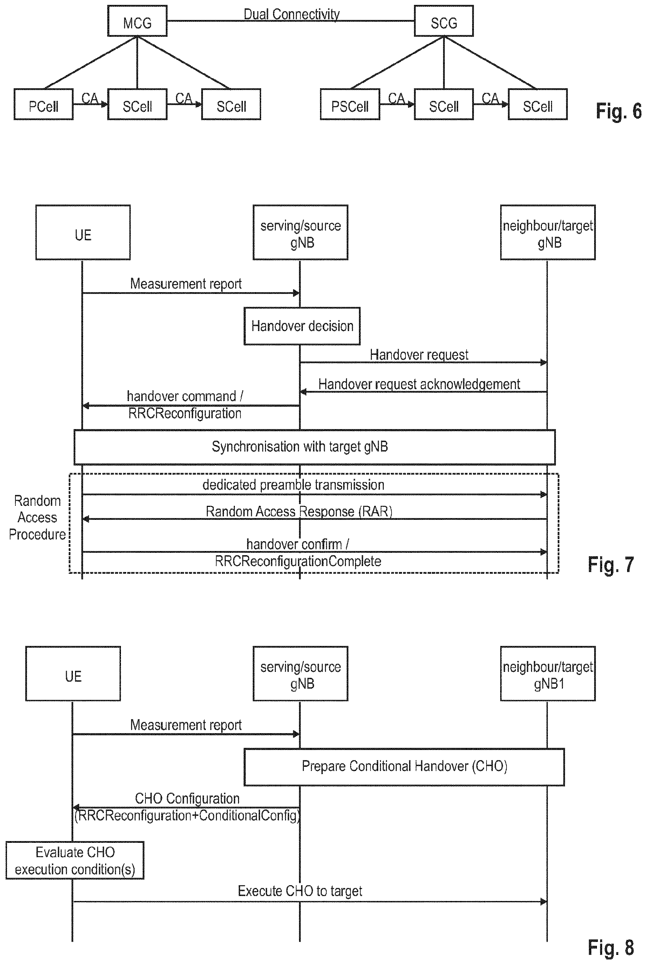

**Fig. 6** illustrates an overview of different cell types in Dual Connectivity.

Moreover, there can be a Multi-Radio Dual Connectivity (MR-DC). With MR-DC, the Master RAN Node functions as the controlling entity, utilizing a Secondary RAN for additional data capacity. Example MR-DC configurations include EN-DC (E-UTRA - NR Dual Connectivity), NR-DC (New Radio Dual Connectivity), NGEN-DC (NG-RAN - E-UTRA Dual Connectivity) and NE-DC (NR - E-UTRA Dual Connectivity).

TS 37.340 v17.1.0 defines the Multi-Radio Dual Connectivity in section 4. As presented in section 4.5 of TS 38.300 v17.1.0, Conditional PSCell Addition (CPA) and Conditional PSCell change (CPC) are defined in TS 37.340, and will be explained further below.

### Handover procedure

A typical and simplified handover is illustrated in **Fig. 7** and explained briefly in the following. A handover of a UE involves that a source base station makes the decision whether to hand over the UE from a source/serving gNB to a neighbour/target gNB (target radio cell). The decision is typically made by a source gNB, e.g., based on measurement results from the UE. The measurement results may be carried in one or more measurement reports, e.g. in the measurement report as illustrated in Fig. 7. Measurement reports are transmitted by the UE to assist the source cell with the handover procedure.

The handover is then prepared (preparation phase) between the two involved base stations, that is a source base station (herein may be interchangeably used with source gNB, source cell) and a target base station (herein may be interchangeably used with target gNB, target cell). The source gNB may transmit a handover request message to the target base station, which in turn may respond with a Handover request acknowledgement message so as to implement the preparation phase. Such a preparation phase allows a neighbour cell to decide whether it has the capacity to accept a further UE (e.g., acknowledging the handover) and reserving resources for the UE to be handed over.

Then, in the execution phase, the UE is instructed through a handover command message (e.g., a RRCReconfiguration message) to switch from the source cell to the target cell, which for example involves reconfiguration of the UE's radio resources so as to establish a connection with the target base station of the target radio cell. The UE accordingly performs the reconfiguration and attaches to the new target base station, which comprises a synchronization and performing a (e.g., contention-free) random access procedure. For instance, the synchronization may comprise that the UE acquires the synchronization signals (e.g., Primary Synchronization Signal, PSS, and Secondary Synchronization Signal, SSS) typically used to obtain the cell identity and frame timing of the target cell, thereby achieving time and frequency synchronization. The random access procedure is performed by the UE, e.g., in order to acquire the timing advance value and to obtain uplink resources for uplink transmission with the RAR message. For instance, it consists at least in transmitting the RACH preamble (e.g., a dedicated preamble, in line with what the preamble indicated in the handover command message for a contention-free RACH), the reception of the Random Access Response message (e.g., including an uplink grant), and finally as the third and last step of the random access procedure, the UE confirms that is has completed the reconfiguration and access to the target cell by transmitting a handover confirm message (RRCReconfigurationComplete message) to the target gNB.

An exemplary implementation of such a handover procedure is defined for 5G NR for RRC Connected mobility in the 3GPP Technical Standard TS 38.300 v17.1.0, section 9.2.3.2.

The handover command message may include information of the target cell, such as the target cell ID and configuration information to be able to connect the target cell, as well as handover-accept and handover-reject conditions.

As an exemplarily and simplified overview, the RRCReconfiguration message may contain one or more of:
- Target cell ID
- New C-RNTI
- Target gNB security algorithm identifiers for the selected security algorithms
- Dedicated RACH resources
- Common RACH resources
- Association between RACH resources and SSB(s)
- System information of the target cell

According to a more detailed exemplary definition of the possible content of the handover command message, 5G NR defines the *RRCReconfiguration* message of 3GPP TS 38.331 v17.1.0, section 6.2.2. According to 5G, the RRCReconfiguration message is the command to modify an RRC connection. It may convey information for measurement configuration, mobility control, radio resource configuration (including RBs (radio bearer), MAC (Medium Access Control) main configuration and physical channel configuration) and AS (Access Stratum) security configuration.

### Conditional Handover - CHO

In the legacy handover procedure presented above, the gNB is in charge of making the decision whether the handover should be performed or not. This handover procedure is a reactive process and prone to resulting in handover failures. For instance, it can happen that when the radio link becomes degraded and the mobile terminal needs to send measurement reports, the measurement reports never reach the network. Or, even if they do, the network tries to respond with a handover command that may never reach the mobile terminal, either because the downlink-is degraded and/or the handover command is so large that it requires multiple transmissions.

One important mobility enhancement specified by 3GPP in Rel-16, named "*Conditional Handover (CHO)*"*,* focuses on reducing the number of failure occurrences while a user is moving, for example, when a handover between cells fails or when a connection fails even before a handover (HO) is triggered. CHO thus improves mobility robustness for the handover. Furthermore, it allows reducing signaling and reducing the handover delay. CHO can be used to change the PCell, either for a UE without Dual Connectivity or for a master cell group for a UE with Dual Connectivity. In DC (Dual Connectivity) a PCell change procedure can be performed to change the PCell of a Master Cell Group.

Because of the usefulness, CHO has been considered for many areas where cellular communication is applied, including e.g., Mobile Broadband (MBB), in Non-Terrestrial Networks (NTN), in Integrated Access Backhaul, and NR-Unlicensed.

In a conditional handover, the mobile terminal receives from the source gNB a handover command, (which is e.g., a RRCReconfiguration message which contains conditional configuration information prepared by a target candidate cell). When received, the mobile terminal stores the configuration of the handover command, instead of applying it immediately as in the legacy handover. Together with the handover command, the mobile terminal also receives an associated condition to be monitored by the mobile terminal. The mobile terminal only applies the stored command when the condition is satisfied. Then, the mobile terminal executes the handover and connects to the target node as in a normal handover.

In one example, the source gNB can be responsible for preparing the conditional handover, including the execution conditions as to when the UE shall execute (i.e. trigger) the CHO. On the other hand, the candidate target gNB(s) provide the CHO configuration parameters to be forwarded by the source gNB to the mobile terminal.

An exemplary and basic CHO procedure is illustrated by the signaling diagram of **Fig. 8****.** As apparent, the source gNB prepares the CHO with the target gNB. The target gNB provides the corresponding target-cell-specific configuration parameters to the source gNB. The source gNB sends a CHO command to the UE comprising the target cell configuration and execution conditions for the target cell. Upon reception of the CHO command, the UE does not detach from the source gNB (unlike in the legacy handover), but instead the UE continues exchanging UL and DL data with the source gNB, until the CHO execution condition is met. Once the execution condition for the target cell is fulfilled, the UE initiates the CHO execution (e.g., in the same or similar manner as in the legacy handover).

According to one example, the configuration parameters of the target gNB, can include one or more of the following:
- radio resource configuration of the candidate target cell, such as resource blocks, physical channel configuration,
- security configuration of the candidate target cell,
- dual connectivity information, such as master cell group information, secondary cell group information,
- measurement configuration of the candidate target cell,
- mobility information (including e.g., handover configuration and the conditional configuration.

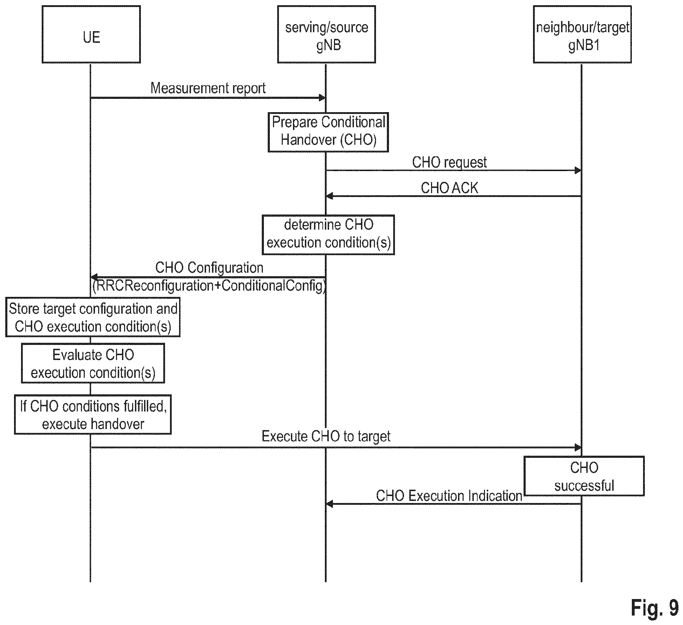

Another exemplary and simplified CHO procedure is illustrated by the signaling diagram of **Fig. 9****,** with more details compared to the basic signaling diagram of Fig. 8. As apparent therefrom, the source gNB prepares the CHO, e.g., based on measurements received from the mobile terminal. The source gNB thus identifies gNB1 as a potential target of the CHO and transmits a handover request (here, CHO request) (e.g., in 5G, the corresponding CHO-related IE in the handover request message is the IE Conditional Handover Information Request, e.g., according to TS 38.423 v17.1.0) to the target gNB. The target gNB processes the received handover request (e.g., performs admission control) and, assuming the target gNB allows access of the mobile terminal to its cell, the target gNB sends a suitable CHO response message (CHO ACK) to the source gNB. As one example, the shared CHO configuration can include one or more of a requested Target Cell ID and a Maximum number of CHO preparations (see TS 38.423 v17.1.0, section 9.1.1.2). Generally, the CHO ACK message may include the necessary configuration information for accessing the target cell (e.g., in the form of a Handover Request Acknowledge message, e.g., XnAp, Xn application protocol, signaling message according to 3GPP standard TS 38.423).

In this example implementation, it is assumed that the source gNB, upon receiving the CHO ACK from the target cell, determines suitable CHO execution condition(s).

The source gNB then sends a CHO configuration to the mobile terminal, including for instance the configuration information for accessing the target cell (as received by the source gNB from the target gNB) and the determined CHO execution conditions, both of which are stored by the mobile terminal. Consequently, the mobile terminal is thus provided with the necessary information to be able to perform the conditional handover. For example, the UE may store the CHO information in a memory.

Accordingly, the mobile terminal does not immediately execute the handover, but rather first maintains the connection to the source gNB and starts evaluating the CHO execution conditions for the target cell.

When the CHO execution condition is eventually satisfied, the UE executes the handover to the target cell, which for instance involves that the UE detaches from the source gNB, applies the stored configuration corresponding to the target cell, synchronizes to the target cell and completes the handover (e.g., by sending an RRCReconfigurationComplete message to the target gNB). The target cell can inform the source gNB that the UE has successfully accessed the target cell, see CHO Execution Indication message of Fig. 9. One exemplary implementation is another XnAp message, such as Handover Success signaling message of 3GPP TS 38.423.

There are several options on how to implement the condition(s) for the CHO. It is assumed that a condition defines criteria as when to apply the stored handover command, wherein the criteria is e.g., based on the quality of the serving cell(s) and neighbor cells (somewhat similar to the condition that leads the mobile terminal to transmit a measurement report when the condition is fulfilled). However, rather than triggering a transmission of a measurement report, the UE triggers the CHO towards the target cell.

For example, the network can configure the wireless terminal to execute the CHO when a neighbor cell becomes an offset better than the serving cell (e.g., similar to Event A3), or when the serving cell becomes worse than 1^{st} threshold and neighbour cell becomes between than 2^{nd} threshold (e.g., similar to Event A5). The measurements for determining the cell quality can be based e.g., on measurements such as Radio Signal Received Power, RSRP, and quality represented by Radio Signal Received Quality, RSRQ, and Signal to Interference and Nose Ratio, SINR). It is also possible to configure two (or more) (sub-)conditions for the mobile terminal and associate these plural (sub-)conditions with the stored command - i.e., the command is applied only if all (sub-)conditions are fulfilled.

As a further exemplary implementation of the CHO, if a UE is configured with CHO configuration and before the CHO execution condition is satisfied another (legacy) HO Command is received from the gNB, then, the UE will execute the handover based on the (legacy) HO Command received and will not wait for any of the CHO Conditions to be fulfilled. In brief, the legacy handover takes precedence over the CHO.

According to one exemplary implementation, the illustrated CHO configuration contains both the configuration of the CHO candidate cell(s) (generated by the candidate gNB(s)) and the respective execution condition(s) (generated by the source gNB). For example, a configuration of a CHO candidate cell may include e.g., a candidate cell list with corresponding cell IDs, and carrier frequencies for the candidate cells. The execution conditions can include CHO-related trigger events, such as the above mentioned A3/A5 events, and trigger quantities (e.g., RSRP and RSRQ, RSRP and SINR, etc.).

An exemplary 5G-compliant implementation of a Conditional Handover will be briefly explained in the following, with more details being available from the 3GPP technical standards, including e.g., TS 38.331 v17.1.0, 38.300 v17.1.0 and 38.423 v17.1.0.

TS 38.331 defines the RRCReconfiguration procedure and messages, used as part of the CHO, and the corresponding UE behaviour e.g., in sections 5.3.5, 5.3.5.1, 5.3.5.2, 5.3.5.3, 5.3.5.4. The Condition Reconfiguration is defined in section 5.3.5.13 of TS 38.331, used by the network to configure a UE with one or more candidate SpCells. The network provides the configuration parameters for the target SpCell in the *ConditionalReconfiguration* IE, as part of the *RRCReconfiguration* IE. The *ConditionalReconfiguration* IE provides the configuration of the candidate target SpCells and execution condition(s) for conditional handover, conditional PSCell additional (CPA, see later discussion), and conditional PSCell change (CPC, see later discussion).

### ConditionalReconfiguration

The IE *ConditionalReconfiguration* is used to add, modify and release the configuration of conditional reconfiguration.

### ConditionalReconfiguration information element

```
 -- ASN1START
 -- TAG-CONDITIONALRECONFIGURATION-START
 ConditionalReconfiguration-r16 ::= SEQUENCE {
     attemptCondReconfig-r16 ENUMERATED {true}
     OPTIONAL, -- Cond CHO
     condReconfigToRemoveList-r16 CondReconfigToRemoveList-r16
     OPTIONAL, -- Need N
     condReconfigToAddModList-r16 CondReconfigToAddModList-r16
     OPTIONAL, -- Need N
 ... }
 CondReconfigToRemoveList-r16 ::= SEQUENCE (SIZE (1.. maxNrofCondCells
 -r16)) OF CondReconfigId-r16
 -- TAG-CONDITIONALRECONFIGURATION-STOP
 -- ASN1STOP
```

| ***ConditionalReconfiguration* field descriptions** |
|---|
| ***attemptCondReconfig*** |
| If present, the UE shall perform conditional reconfiguration if selected cell is a target candidate cell and it is the first cell selection after failure as described in clause 5.3.7.3. |

| ***condReconfigToAddModList*** |
|---|
| List of the configuration of candidate SpCells to be added or modified for CHO, CPA or CPC. |

| ***condReconfigToRemoveList*** |
|---|
| List of the configuration of candidate SpCells to be removed. |

| **Conditional Presence** | **Explanation** |
|---|---|
| *CHO* | The field is optional present, Need R, if the UE is configured with at least a candidate SpCell for CHO. Otherwise the field is not present. |

### CondReconfig ToAddModList

The IE CondReconfigToAddModList concerns a list of conditional reconfigurations to add or modify, with for each entry the condReconfigld and the associated condExecutionCond/condExecutionCondSCG and condRRCReconfig.

### CondReconfigToAddModList information element

```
 -- ASN1START
 -- TAG-CONDRECONFIGTOADDMODLIST-START
 CondReconfigToAddModList-r16 ::= SEQUENCE (SIZE (1.. maxNrofCondCells-r16)) OF
 CondReconfigToAddMod-r16
 CondReconfigToAddMod-r16 ::= SEQUENCE {
     condReconfigId-r16 CondReconfigId-r16,
     condExecutionCond-r16 SEQUENCE (SIZE (1..2)) OF MeasId
     OPTIONAL, -- Need M
     condRRCReconfig-r16 OCTET STRING (CONTAINING
     RRCReconfiguration) OPTIONAL, -- Cond condReconfigAdd
     ..., [[
     condExecutionCondSCG-r17 OCTET STRING (CONTAINING
     CondReconfigExecCondSCG-r17) OPTIONAL -- Need M
     ] ] }
     CondReconfigExecCondSCG-r17 ::= SEQUENCE (SIZE (1..2)) OF MeasId
     -- TAG-CONDRECONFIGTOADDMODLIST-STOP
     -- ASN1STOP
```

| | ***CondReconfiqToAddMod* field descriptions** |
|---|---|
| | ***condExecutionCond*** |
| | The execution condition that needs to be fulfilled in order to trigger the execution of a conditional reconfiguration for CHO, CPA, intra-SN CPC without MN involvement or MN initiated inter-SN CPC. When configuring 2 triggering events (Meas Ids) for a candidate cell, network ensures that both refer to the same *measObject.* For CHO, if network configures *condEventD1* or *condEventT1* for a candidate cell network configures a second triggering event *condEventA3, condEventA4* or *condEventA5* for the same candidate cell. Network does not configure both *condEventD1* and *condEventT1* for the same candidate cell. |

| | ***condExecutionCondSCG*** |
|---|---|
| | Contains execution condition that needs to be fulfilled in order to trigger the execution of a conditional reconfiguration for SN initiated inter-SN CPC. The Meas Ids refer to the *measConfig* associated with the SCG. When configuring 2 triggering events (Meas Ids) for a candidate cell, network ensures that both refer to the same *measObject.* For each *condReconfigurationId,* the network always configures either *condExecutionCond* or *condExecutionCondSCG* (not both). |

| | ***condRRCReconfig*** |
|---|---|
| | The *RRCReconfiguration* message to be applied when the condition(s) are fulfilled. The *RRCReconfiguration* message contained in *condRRCReconfig* cannot contain the field *conditionalReconfiguration* or the field *daps-* |
| | *Config.* For CPA and for CPC, the *RRCReconfiguration* message contained in *condRRCReconfig* cannot contain the field *scg-State.* |

| **Conditional Presence** | **Explanation** |
|---|---|
| *condReconfigAdd* | The field is mandatory present when a *condReconfigId* is being added. Otherwise the field is optional, need M. |

### CondReconfigId

The IE *CondReconfigId* is used to identify a CHO, CPA or CPC configuration.

### CondReconfigId information element

```
 -- ASN1START
 -- TAG-CONDRECONFIGID-START
 CondReconfigId-r16 : := INTEGER (1.. maxNrofCondCells-r16)
 -- TAG-CONDRECONFIGID-STOP
 -- ASN1STOP
```

Moreover, TS 38.331 defines the *ReportConfigNR* IE in section 6.3.2, which specifies criteria for triggering a CHO, CPA or CPC event.

TS 38.300 defines the Conditional Handover in section 9.2.3.4, as a handover that is executed by the UE when one or more handover execution conditions are met. The UE starts evaluating the execution condition(s) upon receiving the CHO configuration, and stops evaluating the execution condition(s) once a handover is executed. Further, an execution condition may consist of one or two trigger condition(s). Only single RS type is supported and at most two different trigger quantities (e.g., RSRP and RSRQ, RSRP and SINR, etc.) can be configured simultaneously for the evaluation of CHO execution condition of a single candidate cell. Section 16.4.3.2.2 explains the CHO applied to Non-Terrestrial Networks.

As one exemplary possibility of the general conditional handover, instead of preparing only one target cell as in the legacy case, multiple candidate target cells can be prepared in advance in the network. This can be advantageous, because due to the delayed handover the specific target cell to be accessed by the mobile terminal is not certain. Correspondingly, the mobile terminal receives various target cell configurations and CHO trigger condition(s) for each target cell configuration to be monitored. When a condition for one of the configured candidate target cells is satisfied, then the mobile terminal executes the handover to that target node based on the already-received target cell configuration.

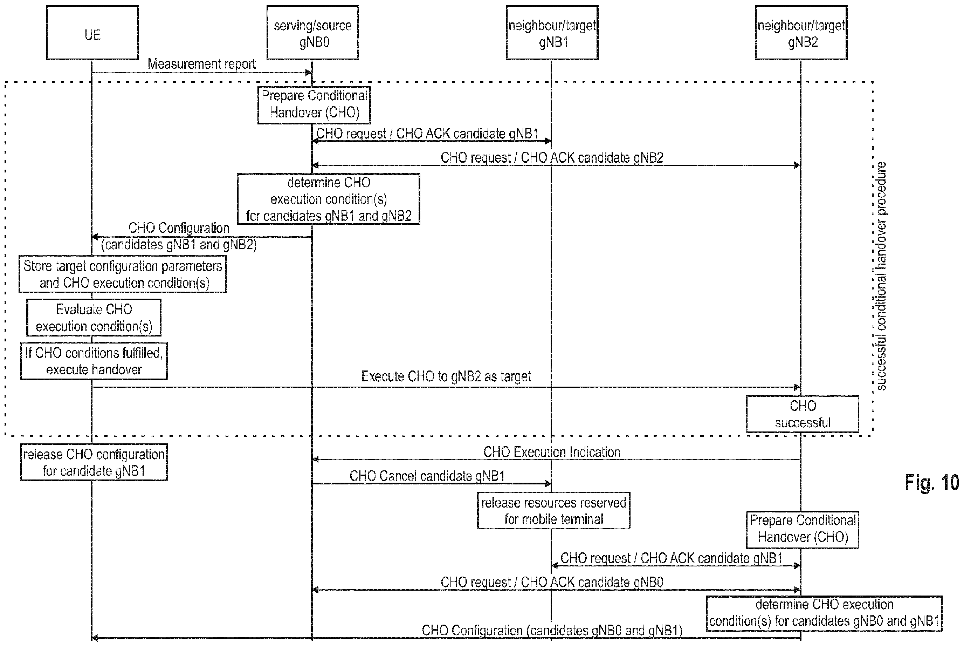

The CHO for the scenario with more than one candidate target cell (here, two candidate target cells of gNB1 and gNB2 respectively) is illustrated in **Fig. 10****,** being a signaling diagram similar to the one provided in Fig. 9 for the scenario with only one candidate target cell. The signaling diagram is to a large extent the same as for Fig. 9. One exception is that the CHO preparation is performed for two candidate target cells, controlled by gNB1 and gNB2 respectively. As apparent from Fig. 10, the CHO preparation including the CHO request and the CHO ACK are illustrated in a simplified manner as two-side arrows for the two candidate target cells of gNB1 and gNB2.

The source gNB correspondingly determines the CHO execution condition(s) for each candidate target cell, and provides the CHO configuration and respective CHO execution condition for both candidate target cells to the mobile terminal.

It is furthermore exemplarily assumed that the source gNB transmits both CHO configurations for the two candidate target cells and the respective CHO execution condition(s) for each CHO configuration together to the UE. Alternatively, these may be transmitted to the UE separately for each candidate target cell.

In the scenario of Fig. 10, it is exemplarily assumed that the mobile terminal determines that the CHO execution condition(s) for target gNB2 are fulfilled and thus executes the handover to the target cell of gNB2.

The conditional handover procedure of Fig. 10 includes two further important steps. First, after successful completion of the CHO, the UE releases (e.g., deletes from its storage) all the CHO configurations and CHO execution conditions, including the one for candidate target cell of gNB1 to which the CHO was not triggered. Second, the source gNB, upon receiving the CHO Execution Indication message from target cell gNB2 informs gNB1 that the CHO for the mobile terminal is cancelled. This allows the gNB1 to release any resources that might have been reserved for the potential CHO of the mobile terminal.

### Conditional PSCell Change

3GPP Release 16 also introduces the Conditional PSCell change procedure (CPC), in order to improve the mobility robustness of a change of the PSCell in dual connectivity scenarios.

In DC (Dual Connectivity, e.g., MR-DC) a PSCell change procedure can be performed to change the PSCell of a Secondary Cell Group. In one example, the PSCell may depend on whether a security key change is required.

Similar to the CHO, a Conditional PSCell change (CPC) is executed only when a corresponding CPC execution condition is met.

CPC reuses many functionalities of the conditional handover, discussed above (see 10.1 of TS 37.340 v17.1.0).

The UE completes the CPC execution procedure by an ULInformationTransferMRDC message to the Master Node (MN) (of the MCG), which includes an embedded RRCReconfigurationComplete message to the new PSCell, if SRB3 is not configured; otherwise, the UE sends the RRCReconfigurationComplete message to the new PSCell directly.

An exemplary 5G-compliant implementation is defined by TS 37.340 v17.1.0, which provides details of the CPC in its section 10.6, as follows.

The CPC configuration contains the configuration of CPC candidate PSCell(s) and execution condition(s) and may contain the MCG configuration for inter-SN CPC, to be applied when CPC execution is triggered.

An execution condition may consist of e.g., one or two trigger condition(s) (CondEvents, as defined in TS 38.331 or TS 36.331). Only single RS (Reference Signal) type and at most two different trigger quantities (e.g., RSRP and RSRQ, RSRP and SINR, etc.) can be used for the evaluation of CPC execution condition of a single candidate PSCell.

Before any CPC execution condition is satisfied, upon reception of PSCell change command or PCell change command, the UE executes the PSCell change procedure as described in clause 10.3 and 10.5 or the PCell change procedure as described in clause 9.2.3.2 in TS 38.300 or clause 10.1.2.1 in TS 36.300, regardless of any previously received CPC configuration.

While executing CPC, the UE is not required to continue evaluating the execution condition of other candidate PSCell(s).

Once the CPC procedure is executed successfully, the UE releases all stored conditional reconfigurations (e.g., for CPC and for CHO, as specified in TS 38.300 or TS 36.300).

Upon the release of SCG, the UE also releases the stored CPC configurations.

In Release 16, the CPC procedure was limited to intra-SN change, without MN involvement. 3GPP Release 17 introduced support of the inter-SN Conditional PSCell Change (CPC).

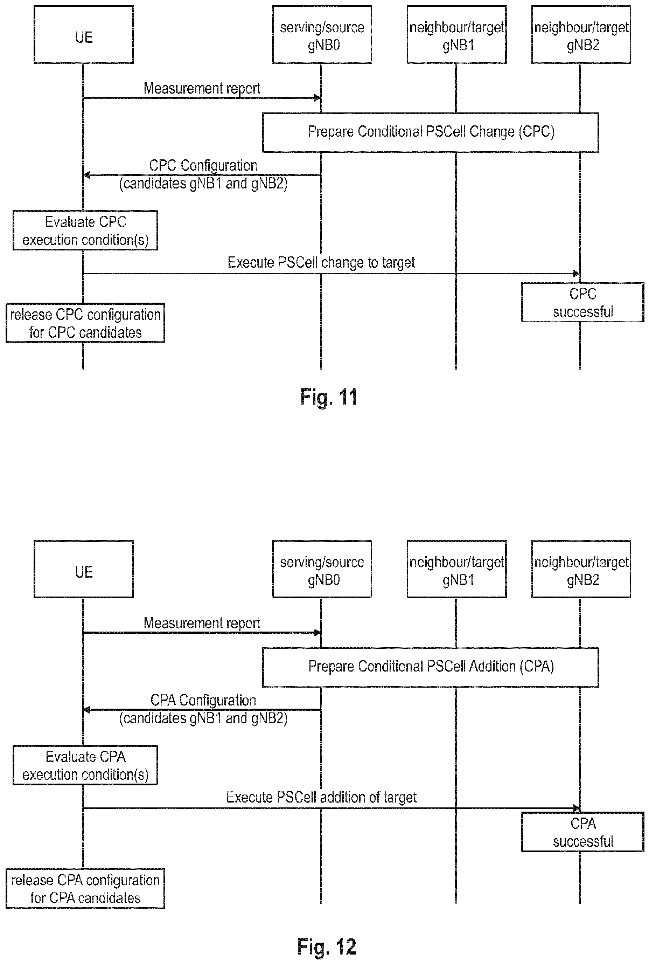

An exemplary and simplified signaling diagram for a CPC procedure is illustrated in **Fig. 11****.** As apparent therefrom, the source gNB prepares the CPC with both candidate target cells of gNB1 and gNB2 respectively. This may e.g., involve the reception at the source gNB of the CPC configuration parameters for gNB1 respectively gNB2, as well as the determination by the source gNB of the CPC execution condition(s) for each of the two CPC candidates. The two CPC configurations (including the CPC configuration parameters and the respective CPC execution conditions) are then transmitted from the source gNB to the UE. The UE does not immediately change the PSCell to one of the two candidate target cells, but evaluates the CPC execution conditions for the two candidates. Eventually, the UE determines that the CPC execution condition for target gNB2 is fulfilled and changes the PSCell to the cell of gNB2. Upon successful completion of the CPC, the UE releases the two CPC configurations, including the one CPC configuration for gNB1 to which the CPC was not executed.

### Conditional PSCell Addition

3GPP also introduces the Conditional PSCell Addition procedure (CPA), in order to improve the mobility robustness when creating a new secondary cell group. According to CPA, a PSCell is added for the secondary cell group in dual connectivity scenarios, and the UE connects to the new PSCell of the SCG in addition to the cells of the MCG. In one example, the additional PSCell can be of another Radio Access Technology than the current one(s). CPA can also be used to add another SCell to the SCG. Furthermore, under dual connectivity, there can be multiple SCGs established for the UE, although only one SCG can be active at a given point in time. Therefore, CPA can also be used to create another SCG with another PSCell, even though this other SCG is in an inactive state at the beginning.

Similar to the CHO, a Conditional PSCell addition (CPA) is defined as a PSCell addition that is executed by the UE only when a corresponding CPA execution condition is met. The UE starts evaluating the execution condition(s) upon receiving the CPA configuration, and stops evaluating the execution condition(s) once PSCell addition or PCell change is triggered.

CPA reuses many functionalities of the conditional handover, discussed above (see 10.1 of TS 37.340 v17.1.0).

In one exemplary implementation, the CPA procedure is used to establish a connection between the UE and an additional PSCell of a newly created SCG, including the configuration parameters for the PSCell.

TS 37.340 v17.1.0 discloses the Conditional PSCell addition in section 10.2.3, as part of the Secondary Node Addition of section 10.2. According to this exemplary 5G-compliant implementation, the CPA configuration contains the configuration of CPA candidate PSCell(s), execution condition(s) and may contain the MCG configuration, to be applied when CPA execution is triggered. An execution condition may consist of one or two trigger condition(s) (CondEvents, as defined in TS 38.331 [4] or TS 36.331 [10]). Only a single RS type and at most two different trigger quantities (e.g., RSRP and RSRQ, RSRP and SINR, etc.) can be used for the evaluation of CPA execution condition of a single candidate PSCell.

Before any CPA execution condition is satisfied, and upon reception of a normal (i.e. non-conditional) PSCell addition command or PCell change command, the UE executes the PSCell addition procedure as described in clause 10.2.1 or 10.2.2, or the PCell change procedure as described in clause 9.2.3.2 in TS 38.300 or clause 10.1.2.1 in TS 36.300, regardless of any previously received CPA configuration. Upon the successful completion of PSCell addition procedure or PCell change procedure, the UE releases the stored CPA configuration.

While executing CPA, the UE is not required to continue evaluating the execution condition of other candidate PSCell(s).

Once the CPA procedure is executed successfully, the UE releases all stored conditional reconfigurations (i.e. for CPA and for CHO, as specified in TS 38.300 or TS 36.300). CPA configuration in HO command, in PSCell addition command, or in conditional configuration (i.e. CPA, CPC or CHO configuration) is not supported.

An exemplary and simplified signaling diagram for a CPA procedure is illustrated in Fig. 12. As apparent therefrom, the source gNB (which can thus be considered a cell of the master cell group) prepares the CPA with both candidate target cells of gNB1 and gNB2 respectively. This may e.g., involve the reception at the source gNB of the CPA configuration parameters for gNB1 respectively gNB2, as well as the determination by the source gNB of the CPA execution condition(s) for each of the two CPA candidates. The two CPA configurations (including the CPA configuration parameters and the respective CPA execution conditions) are then transmitted from the source gNB to the UE. The UE does not immediately add the PSCell of gNB1 or gNB2, but evaluates the CPA execution conditions for the two candidates. Eventually, the UE determines that the CPA execution condition for target gNB2 is fulfilled and creates the SCG with the PSCell of gNB2. Upon successful completion of the CPA, the UE releases the two CPA configurations, including the one CPA configuration for gNB1 to which the CPA was not executed.

### Further Improvements

In the above, the mobility enhancements of CHO, CPC and CPA introduced by 3GPP Release 16 and 17 have been discussed. In Release 18, further enhancements for the NR mobility are envisaged.

The inventors have identified problems in the current definitions of the CHO, CPC, and CPA procedures. In particular, the current Release 16 and 17 NR specifications respectively require the UE to release the CHO / CPC / CPA configurations, upon successful completion of a corresponding procedure.

For instance, as illustrated in Fig. 10, upon successful completion of a CHO, the UE releases all CHO configurations, including the CHO configuration parameters and CHO execution conditions.

As illustrated in Fig. 11, upon successful completion of a CPC, the UE releases all CPC configurations, including the CPC configuration parameters and CPC execution conditions.

As illustrated in Fig. 12, upon successful completion of a CPA, the UE releases all CPA configurations, including the CPA configuration parameters and CPA execution conditions.

As a result, the network and the UE need to perform reconfiguration and reinitialization for CHO / CPC / CPA, in order to be able to perform another subsequent CHO / CPC / CPA, as explained in connection with the above Fig. 10, 11, 12, respectively.

This leads to an increase in signaling overhead. After each successful CHO / CPC / CPA procedure, the UE needs to receive again the complete set of configuration parameters and execution conditions for each candidate cell.

Furthermore, this may lead to an increase in the delay for the CHO / CPC / CPA procedures, because the UE needs to be configured first before being able to execute the CHO / CPC / CPA after a previous successful CHO / CPC / CPA.

The above disadvantages are particularly severe in case of frequent cell changes, e.g., when operating in FR2 (which includes frequency bands from 24.25 GHz to 71.0 GHz).

The inventors have thus identified the possibility of providing improved mobility procedures (such as CHO, CPC, CPA), for allowing to avoid one or more of the above described disadvantages. The present invention relates to different solutions and variants for such improved mobility procedures.

### Embodiments

In the following, UEs, base stations, and respective procedures to meet these needs will be described for the new radio access technology envisioned for the 5G mobile communication systems, but which may also be used in previous LTE mobile communication systems or future mobile communication systems. Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the respective features and embodiments. Consequently, a skilled person is aware that the embodiments and their scope of protection should not be restricted to particular terms exemplarily used herein for lack of newer or finally agreed terminology, but should be more broadly understood in terms of functions and concepts that underlie the solutions explained in the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be gNB in a Non-Terrestrial Network (NTN) NR system.

Communication between the UE and the base station is typically standardized and may be defined by different layers, such as PHY, MAC, RRC etc. (see above background discussion).

The expression **"initial cell configuration"** here can be understood as a configuration for a cell usable in the context of performing a cell mobility procedure, such as the CHO, CPC or CPA procedures. The term "initial" in said connection reflects that the cell configuration is exchanged initially (e.g., for the first time between the communication partners) and thus may be complete in the sense that it comprises a complete set of parameters for the cell. In one exemplary implementation, the initial cell configuration further comprises **"an execution condition",** so as to limit the execution of the cell mobility procedure to the fulfillment of a condition.

The "initial cell configuration" can be distinguished from the **"differential cell configuration",** which is used subsequent to the "initial cell configuration" (after successfully performing a cell mobility procedure). The term "differential" in said connection is meant to reflect that the "differential cell configuration" relates to the differences with respect to the initial cell configuration, and may thus likely (although not necessarily) be reduced compared to the complete "initial cell configuration".

Moreover, the expression **"updated cell configuration"** can be understood as being different from both the initial cell configuration and the differential cell configuration. In one example, the updated cell configuration can be obtained based on the initial cell configuration and the differential cell configuration, such that the initial cell configuration is changed according to the differential cell configuration e.g., by replacing, adding or deleting elements of the cell configuration.

The expression **"cell configuration parameters"** can be understood as parameters related to a cell (more precisely a candidate target cell), wherein these parameters can be used for performing the conditional cell mobility procedure with said cell.

The expression **"candidate target cell"** can be understood as referring to a cell which is a candidate target for a conditional cell mobility procedure. There may be one or more candidate target cells, and one of these is likely to eventually become the actual target cell of the conditional cell mobility procedure.

The expression **"conditional cell mobility procedure"** can be understood to cover a mobility procedure relating to a different cell, which execution is not immediate but dependent on the fulfillment of an execution condition. Examples of the conditional cell mobility procedure are the conditional handover (CHO, see e.g., 5G-standardized CHO discussed above), the conditional cell change (CPC, see e.g., 5G-standardized CPC discussed above), or the conditional cell addition (CPA, see e.g., 5G-standardized CPA discussed above).

The term **"release",** e.g., in connection with releasing a configuration, can be e.g., understood as "deleting", e.g., deleting the (stored) configuration.

The term **"maintain",** e.g., in connection with maintaining a configuration, can be e.g., understood as being configured not to release, e.g., not releasing the configuration.

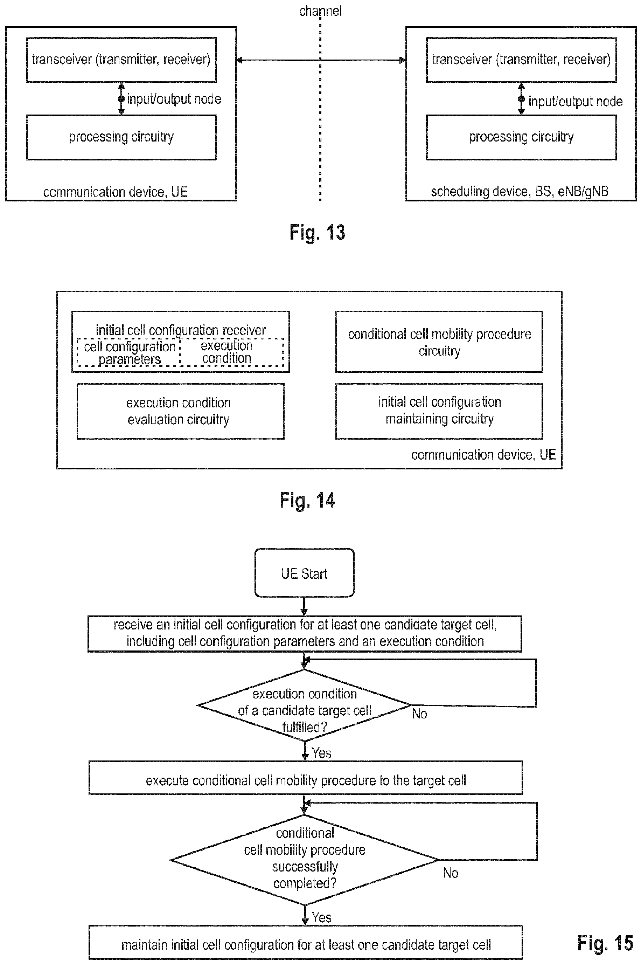

**Fig. 13** illustrates a general, simplified and exemplary block diagram of a user equipment (also termed communication device) and a scheduling device (here exemplarily assumed to be located in the base station, e.g., the LTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e., control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

Different solutions of improved mobility procedures will be described in the following. In said connection, improved UEs, improved base stations and improved integrated circuits are presented, which participate separately or together in the improved mobility procedures. Corresponding methods for the UE behavior and the base station behavior are provided as well. The integrated circuits correspond to the UE and base station, and respectively their behavior.

An improved mobility procedure will be presented in the following.

**Fig. 14** illustrates a simplified and exemplary UE structure according to an exemplary implementation of the improved mobility procedure, which can be implemented based on the general UE structure explained in connection with Fig. 13. The various structural elements of the UE illustrated in said Fig. 14 can be interconnected between one another e.g., with corresponding input/output nodes (not shown) e.g., in order to exchange control and user data and other signals. Although not shown for illustration purposes, the UE may include further structural elements.

As apparent from Fig. 14, the UE may include an initial cell configuration receiver (for receiving an initial cell configuration including cell configuration parameters and an execution condition), an execution condition evaluation circuitry, a conditional cell mobility procedure circuitry, and an initial cell configuration maintaining circuitry.

In the present case, the receiver of the UE can thus be exemplarily configured to at least partly perform one or more of receiving an initial cell configuration for at least one candidate target cell, and furthermore as will become apparent from the below disclosure, receiving a differential cell configuration, etc.

In the present case as will become apparent from the below disclosure, the processing circuitry of the UE can thus be exemplarily configured to at least partly perform one or more of executing the conditional cell mobility procedure when the execution condition is fulfilled, maintaining the received initial cell configuration, generating an updated cell configuration based on the initial and differential cell configurations, etc.

In the present case as will become apparent from the below disclosure, the transmitter of the UE can thus be exemplarily configured to at least partly perform one or more of transmitting measurement reports to the serving cell of the UE, etc.

One exemplary procedure as will be disclosed in more detail further below is implemented by a UE that includes the following. A receiver receives, from a source base station, an initial cell configuration of at least one candidate target cell, wherein each initial cell configuration comprises cell configuration parameters of a respective candidate target cell for performing a conditional cell mobility procedure and comprises an execution condition as to when to execute the conditional cell mobility procedure with said respective candidate target cell. A circuitry of the UE, when the execution condition for a target cell among the at least one candidate target cell is fulfilled, executes the conditional cell mobility procedure with said target cell, based on the cell configuration parameters of said target cell. The circuitry maintains the received initial cell configuration of the at least one candidate target cell, upon successful completion of the conditional cell mobility procedure between the UE and said target cell.

A corresponding exemplary method comprises the following steps performed by a UE:
- receiving, from a source base station, an initial cell configuration of at least one candidate target cell, wherein each initial cell configuration comprises cell configuration parameters of a respective candidate target cell for performing a conditional cell mobility procedure between the UE and said respective candidate target cell and comprises an execution condition as to when to execute the conditional cell mobility procedure with said respective candidate target cell,
- when the execution condition for a target cell among the at least one candidate target cell is fulfilled, executing the conditional cell mobility procedure with said target cell, based on the cell configuration parameters of said target cell, and
- maintaining the received initial cell configuration of the at least one candidate target cell, upon successful completion of the conditional cell mobility procedure between the UE and said target cell.

A corresponding sequence diagram for an exemplary UE behaviour in line with the above-discussed UE and UE method is illustrated in **Fig. 15****.**

The above-described improved mobility procedure thus achieves the object and overcomes some of the drawbacks explained above. For instance, the improved mobility procedure involves maintaining the initial cell configuration upon successful completion of the conditional cell mobility procedure, rather than releasing the initial cell configuration as in the prior art solutions. This allows to save signaling overhead over the air between the UE and the base station, because reconfiguration or update of the cell configuration is allowed based on the maintained initial cell configuration. As a further advantage, the improved mobility procedure allows expediting the subsequent conditional cell mobility procedure, because the maintained initial cell configuration can still be accessed and reused by the UE.

Some exemplary implementations of the improved mobility procedure also involve improved base stations, particularly an improved source base station, to which the UE is currently connected (termed e.g., serving base station because the base station serves the UE) and an improved target base station, being the target of the conditional cell mobility procedure. Correspondingly, the improved mobility procedure also provides improved base stations that participate therein, as will be explained in the following.

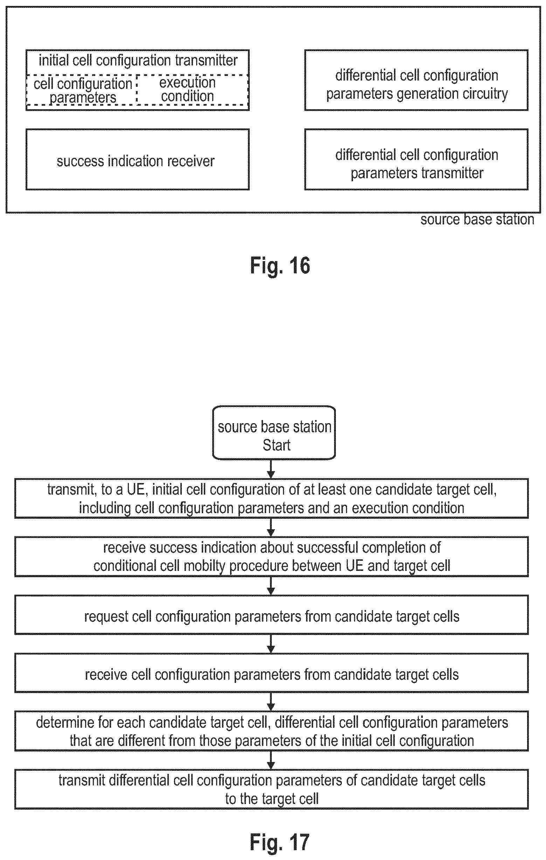

**Fig. 16** illustrates a simplified and exemplary source base station structure according to an exemplary implementation of the improved mobility procedure, which can be implemented based on the general base station structure explained in connection with Fig. 13. The various structural elements of the source base station illustrated in said Fig. 16 can be interconnected between one another e.g., with corresponding input/output nodes (not shown) e.g., in order to exchange control and user data and other signals. Although not shown for illustration purposes, the source base station may include further structural elements.

As apparent therefrom, the source base station comprises an initial cell configuration transmitter (the initial cell configuration comprising cell configuration parameters and execution condition), a success indication receiver, circuitry for generating differential cell configuration parameters, and a transmitter for transmitting the differential cell configuration parameters.

In the present case as will become apparent from the below disclosure, the receiver of the source base station can thus be exemplarily configured to at least partly perform one or more of receiving a success indication, receiving requested cell configuration parameters, etc.

In the present case as will become apparent from the below disclosure, the processing circuitry of the source base station can thus be exemplarily configured to at least partly perform one or more of determining, for each candidate target cell, differential cell configuration parameters, etc.

In the present case as will become apparent from the below disclosure, the transmitter of the source base station can thus be exemplarily configured to at least partly perform one or more of transmitting an initial cell configuration to a UE, transmitting a request to candidate target cells for requesting cell configuration parameters, transmitting the differential cell configuration parameters to the target base station, etc.

One exemplary procedure as will be disclosed in more detail further below is implemented by a source base station that includes the following. A transmitter transmits to a user equipment, UE, an initial cell configuration of at least one candidate target cell, wherein each initial cell configuration comprises cell configuration parameters of a respective candidate target cell for performing a conditional cell mobility procedure and comprises an execution condition as to when to execute the conditional cell mobility procedure between the UE and said respective candidate target cell. A receiver receives, from a target base station of a target cell among the at least one candidate target cell, an indication about a successful completion of the conditional cell mobility procedure between the UE and said target cell. After receiving the indication about the successful completion of the conditional cell mobility procedure,
- the transmitter transmits a request, to one or more candidate target cells among those candidate target cells with which the conditional cell mobility procedure was not performed, for requesting cell configuration parameters of the respective candidate target cell for performing the conditional cell mobility procedure between the UE and the respective candidate target cell, and
- the receiver receives, in response to the transmitted request, from the one or more candidate target cells, the requested cell configuration parameters, and
- circuitry of the base station determines for each of the one or more candidate target cells for which the requested and received cell configuration parameters were received, differential cell configuration parameters of the respective candidate target cell, wherein the differential cell configuration parameters comprise those cell configuration parameters that are different from the cell configuration parameters of the initial cell configuration of the respective candidate target cell, and
the transmitter transmits the differential cell configuration parameters of the one or more candidate target cells to a target base station of said target cell.A corresponding method comprises the following steps performed by the source base station:
transmitting to a user equipment, UE, an initial cell configuration of at least one candidate target cell, wherein each initial cell configuration comprises cell configuration parameters of a respective candidate target cell for performing a conditional cell mobility procedure between the UE and said respective candidate target cell and comprises an execution condition as to when to execute the conditional cell mobility procedure between the UE and said respective candidate target cell,
receiving, from a target base station of a target cell among the at least one candidate target cell, an indication about a successful completion of the conditional cell mobility procedure between the UE and said target cell,
after receiving the indication about the successful completion of the conditional cell mobility procedure,
- transmitting a request, to one or more candidate target cells among those candidate target cells with which the conditional cell mobility procedure was not performed, for requesting cell configuration parameters of the respective candidate target cell for performing the conditional cell mobility procedure between the UE and the respective candidate target cell, and
- receiving, in response to the transmitted request, from the one or more candidate target cells, the requested cell configuration parameters, and
- determining for each of the one or more candidate target cells for which the requested and received cell configuration parameters were received, differential cell configuration parameters of the respective candidate target cell, wherein the differential cell configuration parameters comprise those cell configuration parameters that are different from the cell configuration parameters of the initial cell configuration of the respective candidate target cell, and
- transmitting the differential cell configuration parameters of the one or more candidate target cells to a target base station of said target cell.

A corresponding sequence diagram for an exemplary source base station behavior in line with the above-discussed source base station and corresponding method is illustrated in **Fig. 17****.** The sequence diagram illustrates an exemplary and simplified implementation of the above presented source base station method.

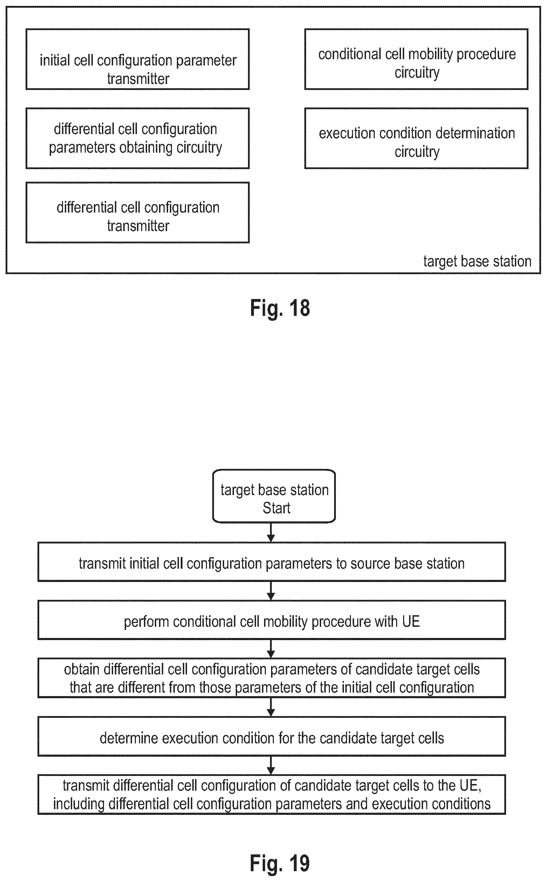

**Fig. 18** illustrates a simplified and exemplary target base station structure according to an exemplary implementation of the improved mobility procedure, which can be implemented based on the general base station structure explained in connection with Fig. 13. The various structural elements of the target base station illustrated in said Fig. 18 can be interconnected between one another e.g., with corresponding input/output nodes (not shown) e.g., in order to exchange control and user data and other signals. Although not shown for illustration purposes, the target base station may include further structural elements.

As apparent therefrom, the target base station comprises an initial cell configuration parameter transmitter, conditional cell mobility procedure circuitry, circuitry for obtaining differential cell configuration parameters, determination circuitry for determining an execution condition, and a differential cell configuration transmitter.

In the present case as will become apparent from the below disclosure, the receiver of the target base station can thus be exemplarily configured to at least partly perform one or more of receiving cell configuration parameters, etc.

In the present case as will become apparent from the below disclosure, the processing circuitry of the target base station can thus be exemplarily configured to at least partly perform one or more of performing the conditional cell mobility procedure, obtaining different cell configuration parameters, determining an execution condition, etc.

In the present case as will become apparent from the below disclosure, the transmitter of the target base station can thus be exemplarily configured to at least partly perform one or more of transmitting initial cell configuration parameters, and transmitting a differential cell configuration, etc.

One exemplary procedure as will be disclosed in more detail further below is implemented by a target base station that includes the following. A transmitter of the target base station transmits, to a source base station, initial cell configuration parameters for performing a conditional cell mobility procedure between a user equipment, UE, and the base station serving a target cell. Circuitry of the target the base station performs the conditional cell mobility procedure with the UE, based on the transmitted initial cell configuration parameters, such that the UE is connected to said target cell.

Circuitry of the target base station obtains differential cell configuration parameters of one or more candidate target cells, for performing the conditional cell mobility procedure between the UE and the respective one or more candidate target cells. The differential cell configuration parameters for a candidate target cell comprises those parameters that are different from initial cell configuration parameters for performing the conditional cell mobility procedure between the UE and the respective candidate target cell. The circuitry determines for each of the one or more candidate target cells, an execution condition as to when to execute the conditional cell mobility procedure between the UE and the respective candidate target cell.

The transmitter transmits, to the UE, a differential cell configuration of each of the one or more candidate target cells, wherein the differential cell configuration comprises the determined differential cell configuration parameters for the one or more candidate target cells and the determined execution condition.

A corresponding method comprises the following steps performed by the target base station:
transmitting, to a source base station, initial cell configuration parameters for performing a conditional cell mobility procedure between a user equipment, UE, and the base station serving a target cell,
performing the conditional cell mobility procedure with the UE, based on the transmitted initial cell configuration parameters, such that the UE is connected to said target cell obtaining differential cell configuration parameters of one or more candidate target cells, for performing the conditional cell mobility procedure between the UE and the respective one or more candidate target cells, wherein the differential cell configuration parameters for a candidate target cell comprises those parameters that are different from initial cell configuration parameters for performing the conditional cell mobility procedure between the UE and the respective candidate target cell,
determining for each of the one or more candidate target cells, an execution condition as to when to execute the conditional cell mobility procedure between the UE and the respective candidate target cell,
transmitting, to the UE, a differential cell configuration of each of the one or more candidate target cells, wherein the differential cell configuration comprises the determined differential cell configuration parameters for the one or more candidate target cells and the determined execution condition.

A corresponding sequence diagram for an exemplary target base station behavior in line with the above-discussed target base station and corresponding method is illustrated in **Fig. 19****.** The sequence diagram illustrates an exemplary and simplified implementation of the above presented target base station method.

As explained above, the improved UE, improved source base station and improved target base station participate in the improved mobility procedure so as to achieve the object, overcome some of the identified problems and achieve advantages.

The improved mobility procedure, during which the improved apparatus participate will be explained in the following.

For sake of explanation and illustration, at first, it is exemplarily assumed that the improved mobility procedure is an improved conditional handover procedure (improved CHO procedure). In general, the conditional handover can be understood as being a procedure according to which the UE disconnects from the source cell and connects to one candidate target cell (possibly among many candidates) upon fulfilling a condition. The conditional handover can be used independently of whether the UE is in dual connection; consequently, the CHO can be used to change the primary cell of the UE, and can also be used to change the primary cell of the UE where the primary cell is part of a master cell group of the UE in the dual connectivity.

However, this assumption of the CHO as the improved conditional cell mobility procedure should not be understood in that the improved mobility procedure should be limited to just the conditional handover. Rather, the principles underlying the improved mobility procedure are also applicable to other conditional cell mobility procedures, such as a conditional cell change procedure (e.g., see CPC above) and a conditional cell addition procedure (e.g., see CPA above). More detailed explanations with regard to an improved CPC procedure and with regard to an improved CPA procedure will be provided further below.

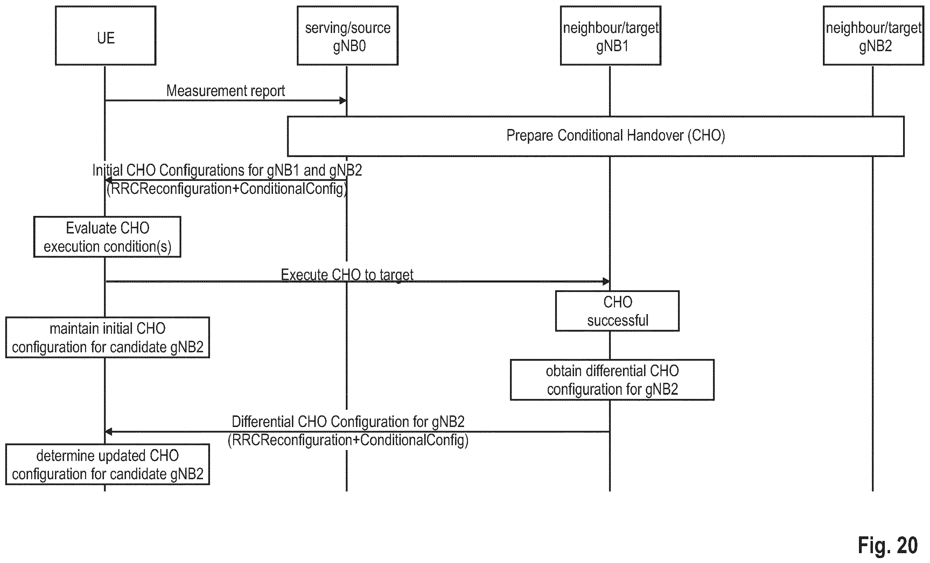

**Fig. 20** is a signaling diagram of an exemplary and simplified implementation of the improved CHO procedure, illustrating the exchange of messages between the different participating entities (here the UE, gNB0, gNB1 and gNB2) and the steps performed at the these entities.

The improved CHO procedure up to the successful completion of the CHO can be e.g., the same as (or similar to) a normal CHO procedure as explained above in connection with Fig. 8, 9 or 10.

Important steps and messages for the improved CHO procedure relate to the point in time after the successful completion of the CHO and involve that the UE maintains the initial CHO configurations, at least maintaining the initial CHO configuration for candidate gNB2 (which is the configuration for a prepared but not-performed CHO). Consequently, the initial CHO configurations are not deleted from UE memory at this point of time. This is in contrast to the legacy CHO procedure (e.g., explained in Fig. 8, 9 or 10), in which the UE releases all the initial CHO configurations upon the successful CHO.

Furthermore, the new serving cell gNB1 of the UE is then responsible for obtaining the differential CHO configurations (here only the one of gNB2) and providing the differential CHO configurations to the UE. Different implementations for the step of obtaining the differential CHO configurations will be explained later. In general, the differential CHO configuration may reflect the differences between the new (updated) CHO configuration of gNB2 (after previous CHO) and the initial CHO configuration of gNB2. The differential CHO configuration of a candidate target cell can comprise those CHO configuration parameters and/or execution condition(s) that are different from the initial CHO configuration of said candidate target cell. The differences may involve e.g., updated parameters (e.g., changed values), possibly new parameters, or released parameters (i.e. no longer present in the CHO configuration).

In one example, the differential CHO configuration thus does not include some or all elements that have not changed, and can thus be smaller in size.

Exemplary parameters that can change after the CHO are for instance, a different candidate cell list (at the new gNB), a different cell ID of the new gNB, a different carrier frequency. But also the execution condition can change, e.g., different sub-conditions can be defined, different measurement quantities or different measurement thresholds.

The UE receives, from the gNB1, the differential CHO configuration for the one candidate target gNB2. The UE then generates an updated CHO configuration for the gNB2 based on the received differential CHO configuration and the stored initial CHO configuration. The updated CHO configuration is thus complete and up to date for being used for a potential CHO to gNB2 in the future.

Although not illustrated, according to a different example, upon successful completion of the CHO to gNB1, the UE may release the initial CHO configuration for gNB1, because it is no longer needed considering that the UE is already successfully connected to said gNB1. However, the CHO configurations for other candidate target cells (in Fig. 20, gNB2) are maintained by the UE.

The above explained improved CHO procedure assumed only two different candidate target cells gNB1 and gNB2 for which an initial CHO configuration was prepared. Correspondingly, only one differential CHO configuration needs to be prepared and provided to the UE upon completion of the CHO to one of them. However, the improved CHO procedure applies the same principles also in case there are more than two candidate target cells. In said case, the initial CHO configuration is prepared for each candidate target cell and provided to the UE. Then, the differential CHO configuration is prepared for some or all of said candidate target cells (except for the new serving cell of the UE after the successful CHO) and provided to the UE.

It is also possible that, after a successful CHO, one or more of the candidate target cells do no longer admit the UE (e.g., due to lack of resources or due to a mobility not being possible from the new serving cell of the UE), such that the new CHO preparation is rejected. In said case, no differential CHO configuration is prepared for said rejecting target cell. Correspondingly, the UE does not receive a differential CHO configuration for said rejecting target cell, and can then decide to release the initial cell configuration for those candidate target cells for which no differential cell configuration was received.

Another exemplary variant can be applied to those cases where there are more than two different candidate target cells for which a differential CHO configuration is to be prepared. It is exemplarily assumed that a candidate cell can belong 1) only to one cell group, 2) to multiple cell groups (e.g., to MCG and another SCG, or to sub-groups e.g., within MCG or SCG), 3) that the same cell may be configured as a PSCell on multiple cell groups. It is furthermore assumed that the configuration for cells in the same cell group is the same. In other words, two candidate target cells of the same cell group can have the same configuration, e.g., the same CHO configuration. Therefore, according to this exemplary variant of the improved CHO procedure, it might suffice to transmit only one differential CHO configuration for two different candidate target cells, in case these two candidate target cells belong to the same cell group sharing a common configuration. This has the advantage that even less signaling has to be transmitted when preparing conditional handovers.

Moreover, although the above exemplary variant has been explained in connection with the improved conditional handover procedure and the transmission of differential CHO configurations, the concept of two candidate cell sharing a common configuration can also be applied to improve the normal CHO procedure. In particular, it might suffice to transmit only one initial (complete) CHO configuration for two different candidate target cells, in case these two candidate target cells belong to the same cell group sharing a common configuration.

According to a further exemplary variant of the improved CHO procedure, a functionality is provided in order to distinguish at the UE between the legacy CHO behaviour (which includes the release of the CHO configurations upon successful completion of the CHO) and the improved CHO behaviour (which includes maintaining the CHO configuration as explained above).

According to one example, pre-configured information is stored in the UE, indicating whether to follow the legacy behaviour or the improved CHO behaviour. For instance, the pre-configured information is received from the source base station, as part of RRC signaling. A new Information Element, named CondConfigRetain, can be defined in said respect, e.g., as part of the already existing IE ConditionalReconfiguration. The UE receives the new Information Element when receiving the RRCReconfiguration message from the source gNB during the CHO.

According to another example, suitable information can be obtained by the UE from the candidate target cell, e.g., when connecting to the candidate target cell via RACH, e.g., in a system information broadcast.

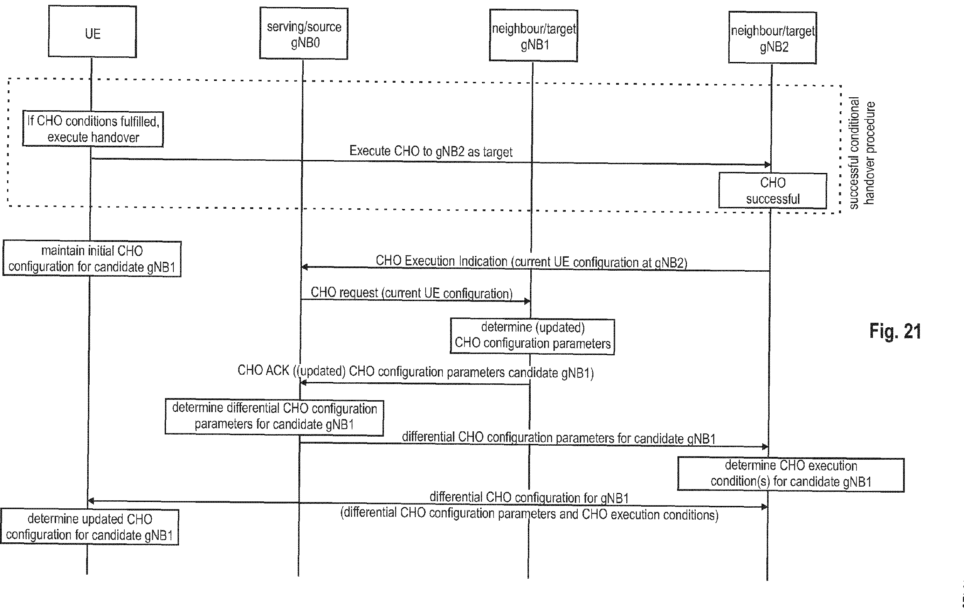

Although not shown in Fig. 20 (and also not in Fig. 21, 22, 23 explained later), according to another exemplary implementation of the improved CHO procedure, the new serving cell gNB1 may not only obtain a differential CHO configuration for the candidate target cell of gNB2, but may also obtain a normal initial CHO configuration for the candidate target cell of gNB0 (i.e. the previous serving cell of the UE). However, since the UE had not yet received before an initial CHO configuration for gNB0, creating a differential CHO configuration for gNB0 is not possible. Instead, the new serving cell gNB1 of the UE requests from gNB0 the necessary CHO configuration parameters, determines a suitable execution condition for performing the improved CHO between the UE and gNB0, and transmits a corresponding initial CHO configuration for gNB0 to the UE.

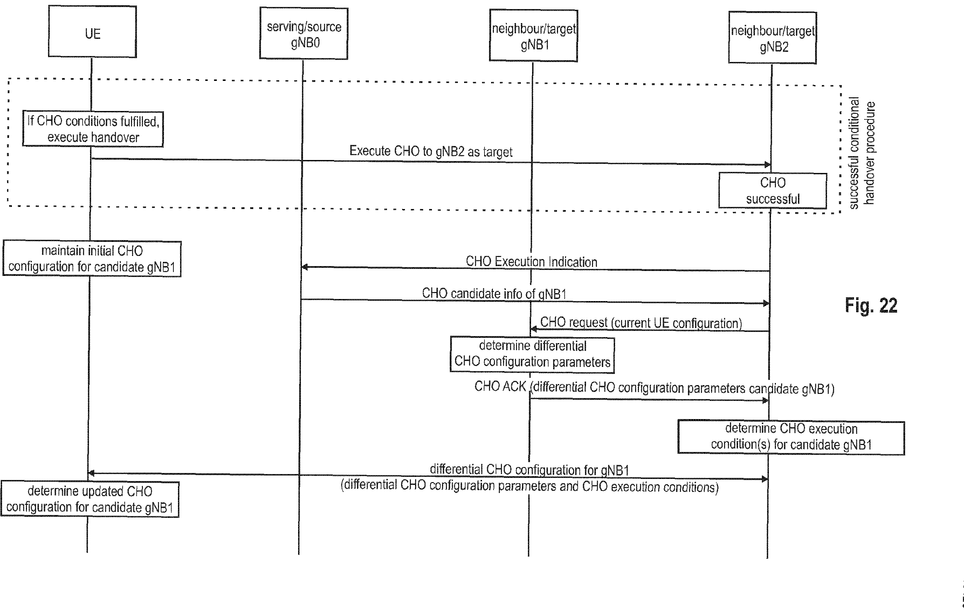

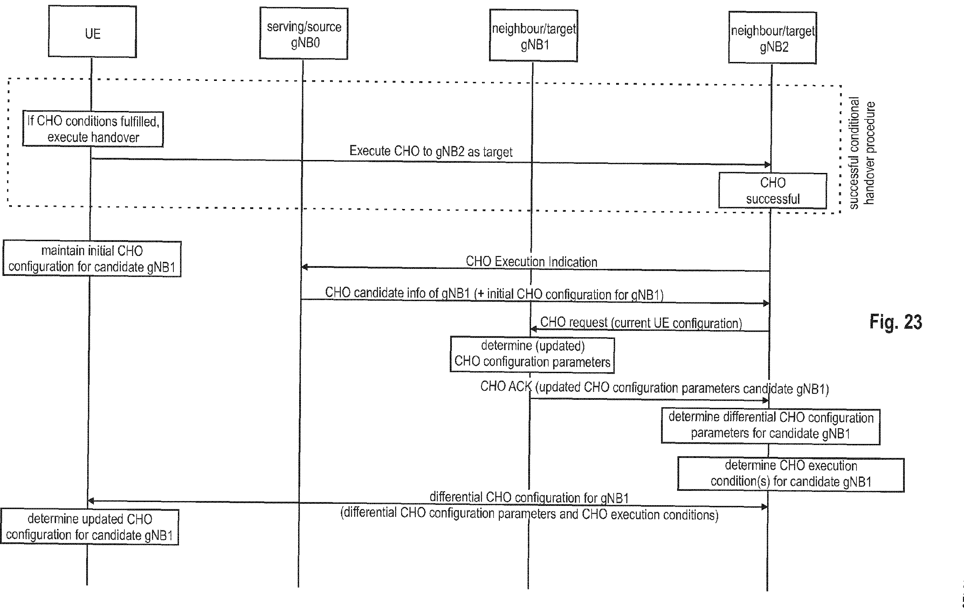

One important aspect about the improved CHO procedure as illustrated in Fig. 20 relates to how the new serving cell of the UE obtains the differential CHO configuration for the other candidate target cell gNB2. There are different implementations of the improved CHO procedure regarding how the new serving cell gNB1 of the UE obtains the differential CHO configuration for the other candidate target cell gNB2. Three different and exemplary implementations will be explained in said respect in the following. In brief, according to a first implementation, the source gNB is mainly responsible for determining the differential CHO configurations of all candidate target cells (see Fig. 21). According to the second implementation, the respective candidate target cells are each responsible for determining their own differential CHO configuration (see Fig. 22). According to the third implementation, the new serving cell is mainly responsible for determining the differential CHO configurations of all candidate target cells (see Fig. 23).

For the explanation of the three implementations according to Fig. 21, 22 and 23, it is exemplarily assumed that a conditional handover is prepared for the UE with candidate target cells of gNB1 and gNB2. Furthermore, at the top of Fig. 21, 22 and 23 to be discussed below, the conditional handover is illustrated in an abbreviated form in the dashed box labeled with "successful conditional handover procedure", particularly only the last steps relating to executing the CHO to the candidate gNB2. The dashed box in Fig. 21, 22, 23 however may for instance correspond to the dashed box explained in connection with Fig. 10, and may thus also include the previous steps performed for a successful conditional handover procedure, particularly the above-mentioned preparation of the conditional handover with candidate target cells of gNB1 and gNB2.

From the perspective of the UE, the three different implementations are the same, because in all three implementations the UE maintains the initial CHO configurations upon successful completion of the conditional handover. Further, the UE receives the differential CHO configurations from its new serving cell (here gNB2), and then also determines the updated CHO configuration based on the stored initial CHO configurations and the received differential CHO configurations. Detailed explanations in said respect have already been provided above in connection with Fig. 20 and will thus not be repeated below.

Correspondingly, the three implementations mainly differ in the interaction of the three base stations involved in the improved conditional handover procedure.

Moreover, the explanation of the following three implementations focuses on how to generate the differential CHO configuration for gNB1, which had been also a candidate for the previous CHO when the UE was located at the gNB0. Other aspects can be the same as explained in other parts of this application and are not repeated below.

### First implementation - serving cell determines all differential CHO configs - Fig. 21

According to this first implementation, the source gNB is mainly responsible for determining the differential CHO configurations of all candidate target cells. In this example, the source eNodeB is responsible for determining the differential CHO configuration parameters of the candidate target cells, while the (differential) execution condition can be prepared by the new serving cell of the UE, gNB2. Therefore, the source gNB needs the suitable information for requesting the CHO configuration parameters from the candidate target cells and then determining therefrom the differential CHO configuration parameters for the respective candidate target cells.

On the other hand, the candidate target cells need not be aware that a differential CHO configuration is to be prepared by the source gNB for the UE rather than a normal CHO configuration. Consequently, the behavior of the candidate target cells need not be different from when participating in the preparation of a normal CHO procedure, e.g., as explained in detail in connection with the CHO preparation for gNB1 and gNB2 according to Fig. 8, 9 or 10 or more generally according to Fig. 20.

The first implementation will be exemplarily discussed based on **Fig. 21****.**

After receiving the CHO Execution indication about the successful completion of the CHO, the source gNB proceeds to contact the candidate target gNB1 for preparing the subsequent CHO procedure between the UE and gNB1 and thus for requesting the CHO configuration parameters of the candidate gNB1 to perform said CHO. For instance, this CHO request transmitted by the source gNB0 to the candidate target gNB1 can be the same as (or similar to) a normal CHO request, used before for preparing the (initial) CHO for candidate targets gNB1 and gNB2.

The candidate target gNB1 processes the received CHO request (e.g., in the usual manner, such as performing admission control), and assuming that gNB1 still allows access of the UE to its cell, gNB1 prepares the CHO configuration parameters. These CHO configuration parameters need not, but can, be different from the CHO configuration parameters prepared previously for the initial CHO (when the UE was connected at the source gNB0). The gNB1 in this sense determines updated CHO configuration parameters for the UE to perform a CHO to gNB1 and then transmits same in response to the gNB0.

On the other hand, the candidate target gNB1 can also determine to no longer admit the UE and thus rejects the CHO request. In said case, the source gNB0 would receive a rejection from the gNB1 and would not determine the differential CHO configuration parameters for said rejecting candidate cell. Consequently, the source gNB0 would also not transmit the differential CHO configuration parameters for said rejecting candidate cell to the new serving cell of the UE. According to one exemplary variant, the source gNB may then also delete the stored initial CHO configuration of said rejecting candidate cell.

Therefore, from source gNB0 perspective, differential CHO configuration parameters are determined for candidate target cells from which the requested cell configuration parameters were received.

Assuming that gNB1 still allows access of the UE to its cell, the source gNB0 receives, in response to the transmitted request, from gNB1 the requested CHO configuration parameters, and thus has the necessary information to prepare the differential CHO configuration parameters.

Correspondingly, source gNB0 determines for gNB1 from which the requested and received cell configuration parameters were received, differential cell configuration parameters of the gNB1. The differential CHO configuration parameters comprise those configuration parameters of the just received (updated) CHO configuration parameters that are different from the corresponding configuration parameters of the initial CHO configuration of gNB1.

The source gNB1 has the previously-prepared initial CHO configuration of gNB1 still stored in its memory, from the previous CHO. For instance, the source gNB1 can compare the initial CHO configuration parameters against the newly received and updated CHO configuration parameters of the gNB1, to identify differences between them, such as updated parameters, possibly new parameters, or released parameters. The source gNB0 then prepares the differential CHO configuration parameters to reflect the determined differences. In one example, the differential CHO configuration parameters do not include some or all of the configuration parameters that have not changed. Therefore, the size of the differential CHO configuration parameters can be smaller than the initial CHO configuration parameters.

The source gNB0 then transmits the differential CHO configuration parameters of gNB1 to gNB2, being the serving cell of the UE. The source of the gNB0 has no connection anymore to the UE.

gNB2 can determine the necessary execution condition for the CHO prepared for candidate target gNB1. Therefore, the gNB2 prepares the differential CHO configuration for gNB1, comprising the differential CHO configuration parameters obtained from source gNB0 and the newly determined execution condition.

In a different example, gNB2 is also able to determine differential execution conditions, rather than new execution conditions. For instance, the source gNB0 has the necessary information about the previous execution condition(s) of the CHO between the UE located at the source gNB0 and candidate target gNB1. Information on said previous execution condition can be transmitted to the gNB2, e.g., together with the differential CHO configuration parameters of candidate gNB1. Therefore, if the execution condition (or any sub-condition) determined by gNB2 for the differential CHO configuration parameters is the same as the execution condition (or any sub-condition) previously determined (by the source gNB) for the previous CHO, there is no need to transmit the same execution condition to the UE, thereby saving additional signaling overhead.

In any case, the UE receives the differential CHO configuration regarding gNB1 and thus has the necessary information to combine the stored initial CHO configuration (received before, e.g., in connection with the previous CHO) and the received differential CHO configuration, as explained above already in detail.

According to a further exemplary variant of the first implementation, the CHO execution indication about the successful CHO transmitted from target gNB2 to source gNB0 includes information on the current UE configuration of the UE at the gNB2. Upon the successful conditional handover, the configuration of the UE at the gNB2 can be different from the previous UE configuration when the UE was located at the source gNB0. The current UE configuration at gNB2 is then transmitted by the gNB0 to the candidate target gNB1, together with the CHO request. The candidate target cell gNB1 can use the UE configuration to determine the CHO configuration parameters.

As one example, the UE configuration information may comprise one or more of:
- a cell ID of the one target cell,
- a UE ID of the UE being located in the one target cell gNB2,
- frequency operation parameters of the UE and
- an indication as to which initial CHO configuration the UE used for executing the CHO procedure.

As an example for a 5G-compliant variant, the UE configuration information may comprise one or more of the following fields of the RRCReconfigurationComplete message (sent by the UE to the target cell gNB2 upon successful CHO) (see also TS 38.331, section 6.2.2 for a definition of the RRCReconfigurationComplete message):

| ***RRCReconfigurationComplete-IEs* field descriptions** |
|---|
| ***needForGapsInfoNR*** |
| This field is used to indicate the measurement qap requirement information of the UE for NR target bands. |

| ***needForNCSG-InfoEUTRA*** |
|---|
| This field is used to indicate the measurement gap and NCSG requirement information of the UE for E-UTRA target bands. |

| ***needForNCSG-InfoNR*** |
|---|
| This field is used to indicate the measurement gap and NCSG requirement information of the UE for NR target bands. |

| ***scg-Response*** |
|---|
| In case of NR-DC (*nr-SCG-Response*)*,* this field includes the *RRCReconfigurationComplete* message. In case of NE-DC (*eutra-SCG-Response*)*,* this field includes the E-UTRA *RRCConnectionReconfigurationComplete* message as specified in TS 36.331 [10]. |

| ***selectedCondRRCReconfig*** |
|---|
| This field indicates the ID of the selected conditional reconfiguration the UE applied upon the execution of CPA or inter-SN CPC. |

| ***uplinkTxDirectCurrentList*** |
|---|
| The Tx Direct Current locations for the configured serving cells and BWPs if requested by the NW (see *reportUplinkTxDirectCurrent* in *CellGroupConfig*)*.* |

| ***uplinkTxDirectCurrentTwoCarrierList*** |
|---|
| The Tx Direct Current locations for the configured uplink intra-band CA with two carriers if requested by the NW (see *reportUplinkTxDirectCurrentTwoCarrier-r16* in *CellGroupConfig*)*.* |

One important parameter of the above is the selectedCondRRCReconfig. For instance, the information on the current conditional configuration which the UE has applied can be important for the source gNB to be able to generate the updated or differential CHO configuration more efficiently and accurately.

Optionally, additional information that may be sent from gNB2 to the source gNB0 as part of the current UE configuration (e.g., together with the CHO Execution Indication includes parameters from the MeasurementReport, Failurelnformation, UEAssistancelnformation, MCGFailurelnformation and other RRC messages.

According to TS 38.331, section 6.2.2, the MeasurementReport message is used for the indication of measurement results. According to TS 38.331, section 6.2.2, the Failurelnformation message is used to inform the network about a failure detected by the UE. According to TS 38.331, section 6.2.2, the UEAssistancelnformation message is used for the indication of UE assistance information to the network. According to TS 38.331, section 6.2.2, the MCGFailurelnformation message is used to provide information regarding NR MCG failures detected by the UE.

### Second implementation - each candidate determines own differential CHO config - Fig. 22

According to the second implementation, the respective candidate target cells are each responsible for determining their own differential CHO configuration. In this example, the candidate target gNB1 is responsible for determining the differential CHO configuration parameters for itself, while the (differential) execution condition can be prepared by the new serving cell of the UE, gNB2. On the other hand, the preparation of the differential CHO configurations for a plurality of candidate target gNBs is coordinated by the new serving cell of the UE, gNB2.

The second implementation will be exemplarily discussed based on **Fig. 22****.**

According to one variant, the UE serving cell gNB2 should receive from the candidate target cells the differential CHO configuration parameters, rather than a normal CHO configuration. Correspondingly, the UE serving cell gNB2 should be able to differentiate for which candidate target cell a differential CHO configuration is to be prepared and for which candidate target cell a normal (complete) CHO configuration is to be prepared. One example variant thus involves that the source gNB0 provides the new serving cell gNB2 with suitable information on the previous CHO configurations prepared for the UE, for instance the one CHO configuration for gNB1 in the present exemplary scenarios. Put differently, the source gNB0, transmits to the serving cell gNB2 identification information about those candidate target cell(s) for which an initial CHO configuration was prepared before and transmitted to the UE.

This can be done by the source gNB0 after receiving the CHO Execution indication about the successful completion of the CHO (as illustrated in Fig. 22). gNB2 can thus request the differential CHO configuration parameters from the indicated candidate target cells, here from gNB1.

The candidate target cell gNB1 will then prepare and return the differential CHO configuration parameters, rather than normal (complete) CHO configuration parameters.

In another example variant, rather than requesting the differential CHO configuration parameters, the UE serving cell gNB2 can request the normal CHO configuration parameters from the candidate target cell. However, since the candidate target cell gNB1 has still the stored initial CHO configuration prepared for the previous CHO, the candidate target cell gNB1 prepares the differential CHO configuration parameters, rather than normal (complete) CHO configuration parameters. In this exemplary variant, it would not be necessary for the source gNB to transmit information on the previous CHO configurations to the new UE serving cell gNB2.

According to both variants of the second implementation, the candidate target cell gNB1 processes the CHO request (e.g., including admission control), and assuming that the gNB1 still allows access of the UE to its cell, gNB1 prepares the differential CHO configuration parameters for access to its cell and transmits same to serving cell gNB2. In the corresponding manner as explained above, these differential CHO configuration parameters include those parameters that are different from the previously-prepared initial CHO configuration (prepared when the UE was still connected to the source gNB0).

On the other hand, the candidate target gNB1 can also determine to no longer admit the UE and thus rejects the CHO request. In said case, the serving cell gNB2 would receive a rejection from the gNB1. Consequently, the serving cell gNB2 would also not transmit the differential CHO configuration parameters for said rejecting candidate cell to the UE.

Assuming that gNB1 still allows access of the UE to its cell, the serving gNB2 receives, in response to the transmitted request, from gNB1 the differential CHO configuration parameters.

In addition, the gNB2 can determine the necessary execution condition for the CHO prepared for candidate target gNB1. Therefore, the gNB2 prepares the differential CHO configuration for gNB1, comprising the differential CHO configuration parameters obtained from gNB1 and the newly determined execution condition.

In a different example, gNB2 is also able to determine differential execution conditions, rather than new execution conditions. For instance, the source gNB0 has the necessary information about the previous execution condition(s) of the CHO between the UE located at the source gNB0 and candidate target gNB1. Information on said previous execution condition can be transmitted to the gNB2, e.g., together with the information on the CHO candidates. Therefore, if the execution condition (or any sub-condition) determined by gNB2 for the differential CHO configuration parameters is the same as the execution condition (or any sub-condition) previously determined (by the source gNB) for the previous CHO, there is no need to transmit the same execution condition to the UE, thereby saving additional signaling overhead.

In any case, the UE receives the differential CHO configuration regarding gNB1 and thus has the necessary information to combine the stored initial CHO configuration (received before, e.g., in connection with the previous CHO) and the received differential CHO configuration, as explained above already in detail.

According to a further exemplary variant of the second implementation, the CHO request transmitted to the candidate target cell gNB1 includes information on the current UE configuration of the UE at the gNB2. Details on said current UE configuration were already provided above in connection with the first implementation and will thus not be repeated here (see also 5G-compliant variant). The candidate target cell gNB1 can use the UE configuration to determine the differential CHO configuration parameters.

### Third implementation - serving cell determines all differential CHO configs - Fig. 23

According to the third implementation, the new serving cell gNB1 is mainly responsible for determining the differential CHO configurations of all candidate target cells (see Fig. 23).

On the other hand, as explained already for the 1^{st} implementation, the candidate target cells need not be aware that a differential CHO configuration is to be prepared for the UE rather than a normal CHO configuration. Consequently, the behavior of the candidate target cells need not be different from when participating in the preparation of a normal CHO procedure, e.g., as explained in detail in connection with the CHO preparation for gNB1 and gNB2 according to Fig. 8, 9 or 10 or more generally according to Fig. 20.

The first implementation will be exemplarily discussed based on **Fig. 22****.**

Considering that the new serving cell gNB2 is responsible for generating the differential CHO configurations, according to one example, the new serving cell is provided with suitable information on the initial CHO configuration prepared previously for the UE and transmitted to the UE, when the UE was still connected to the source gNB0. Correspondingly, the source gNB0 can transmit the previous initial CHO configurations (in present scenario only the one of gNB1) to the serving cell gNB2.

This can be done by the source gNB0 after receiving the CHO Execution indication about the successful completion of the CHO (as illustrated in Fig. 23).

The gNB2 then may contact the candidate target gNB1 for preparing the subsequent CHO procedure between the UE and gNB1 and thus for requesting the CHO configuration parameters of the candidate gNB1 to perform said CHO. For instance, this CHO request transmitted by the serving cell gNB2 to the candidate target gNB1 can be the same as (or similar to) a normal CHO request, used before for preparing the (initial) CHO for candidate targets gNB1 and gNB2.

The candidate target gNB1 processes the received CHO request (e.g., in the usual manner, such as performing admission control), and assuming that gNB1 still allows access of the UE to its cell, gNB1 prepares the CHO configuration parameters. These CHO configuration parameters need not, but can, be different from the CHO configuration parameters prepared previously for the initial CHO (when the UE was connected at the source gNB0). The gNB1 in this sense determines updated CHO configuration parameters for the UE to perform a CHO to gNB1 and then transmits same in response to the UE's serving cell gNB2.

On the other hand, the candidate target gNB1 can also determine to no longer admit the UE and thus rejects the CHO request. In said case, the UE's serving cell gNB2 would receive a rejection from the gNB1 and would not determine the differential CHO configuration parameters for said rejecting candidate cell. Consequently, the gNB2 would also not transmit the differential CHO configuration parameters for said rejecting candidate cell to the UE.

Therefore, from serving cell gNB2 perspective, differential CHO configuration parameters are determined for candidate target cells from which the requested cell configuration parameters were received.

Assuming that gNB1 still allows access of the UE to its cell, the UE's serving cell gNB2 receives, in response to the transmitted request, from gNB1 the requested CHO configuration parameters, and thus has the necessary information to prepare the differential CHO configuration parameters.

In the same manner as explained above, e.g., for the first implementation, the UE's serving cell gNB2 determines for gNB1 from which the requested and received cell configuration parameters were received, differential cell configuration parameters of the gNB1. The differential CHO configuration parameters comprise those configuration parameters of the just received (updated) CHO configuration parameters that are different from the corresponding configuration parameters of the initial CHO configuration of gNB1.

The UE's serving cell can determine the necessary execution condition for the new CHO prepared for candidate target gNB1. Therefore, the gNB2 prepares the differential CHO configuration for gNB1, comprising the determined differential CHO configuration parameters and the newly determined execution condition.

In a different example, gNB2 is also able to determine differential execution conditions, rather than new execution conditions. For instance, gNB2 may obtain from the source gNB0 the necessary information about the previous execution condition(s) of the CHO between the UE located at the source gNB0 and candidate target gNB1, together with the remaining initial CHO configuration (after the CHO Execution indication). Therefore, if the execution condition (or any sub-condition) determined by gNB2 for the differential CHO configuration parameters is the same as the execution condition (or any sub-condition) previously determined (by the source gNB) for the previous CHO, there is no need to transmit the same execution condition to the UE, thereby saving additional signaling overhead.

In any case, the UE receives the differential CHO configuration regarding gNB1 and thus has the necessary information to combine the stored initial CHO configuration (received before, e.g., in connection with the previous CHO) and the received differential CHO configuration, as explained above already in detail.

According to a further exemplary variant of the second implementation, the CHO request transmitted to the candidate target cell gNB1 includes information on the current UE configuration of the UE at the gNB2. Details on said current UE configuration were already provided above in connection with the first implementation and will thus not be repeated here (see also 5G-compliant variant). The candidate target cell gNB1 can use the UE configuration to determine the differential CHO configuration parameters.

### Improved CPC procedure

After the detailed explanations above with regard to an improved CHO procedure, in the following an exemplary and simplified implementation of an improved conditional cell change (CPC) procedure will be explained. The improved CPC procedure can be based on the principles explained above in connection with the improved CHO procedure and will thus not be repeated.

The improved CPC procedure can be understood as being a procedure according to which the UE disconnects from a source cell and connects to a candidate target cell (possibly among many candidates) upon fulfilling an execution condition, i.e., in correspondence to the CHO procedure discussed above. The CPC procedure is typically used when the UE is in dual connectivity, e.g., when the UE is already configured with a master cell group and a secondary cell group and is connected to at least one primary cell of the master cell group (PCell) and to at least one primary cell of the secondary cell group (PSCell). The improved CPC procedure can be performed by the UE so as to change the PSCell of the SCG. Correspondingly, the source cell and the target cell participating in the CPC belong to a secondary cell group of the UE in dual connectivity.

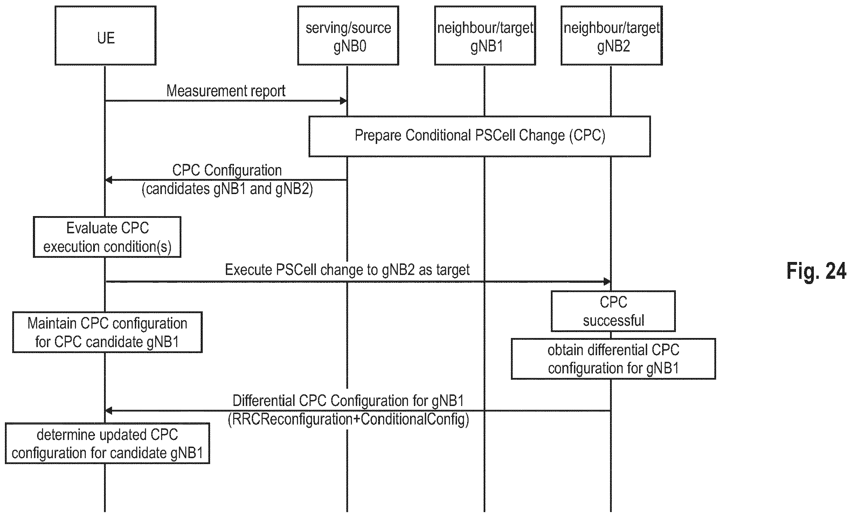

**Fig. 24** illustrates such an exemplary and simplified implementation of an improved conditional cell change (CPC) procedure, illustrating the exchange of messages between the different participating entities (here the UE, gNB0, gNB1 and gNB2) and the steps performed at these entities.

The improved CPC procedure up to the successful completion of the CPC can be e.g., the same as (or similar to) a normal CPC procedure as explained above in connection with Fig. 11.

Important steps and messages for the improved CPC procedure relate to the point in time after the successful completion of the CPC and involve that the UE maintains the initial CPC configurations, at least maintaining the initial CPC configuration for candidate gNB1 (which is the configuration for a prepared but not-performed CPC). Consequently, the initial CPC configurations are not deleted from UE memory at this point of time. This is in contrast to the legacy CPC procedure (e.g., explained in Fig.11), in which the UE releases all the initial CPC configurations upon the successful CPC.

Furthermore, the new PSCell of the UE can then be responsible for obtaining the differential CPC configurations (here only the one of gNB1) and providing the differential CPC configurations to the UE. Different implementations for the step of obtaining the differential CPC configurations have already been explained in connection with the improved CHO procedure and will not be repeated here. In brief, according to the first implementation, the source gNB is mainly responsible for determining the differential CPC configuration parameters of all candidate target cells and providing them to the new PSCell. According to the second implementation, the respective candidate target cells are each responsible for determining their own differential CPC configuration parameters and providing them to the new PSCell. According to the third implementation, the new PSCell gNB1 is mainly responsible for determining the differential CPC configurations of all candidate target cells.

In general, the differential CPC configuration may reflect the differences between the new (updated) CPC configuration of gNB1 (after previous CPC) and the initial CPC configuration of gNB1. The differential CPC configuration of a candidate target cell can comprise those CPC configuration parameters and/or execution condition(s) that are different from the initial CPC configuration of said candidate target cell. The differences may involve e.g., updated parameters (e.g., changed values), possibly new parameters, or released parameters (i.e. no longer present in CPC configuration).

In one example, the differential CPC configuration thus does not include some or all elements that have not changed, and can thus be smaller in size.

The UE receives, from the gNB2, the differential CPC configuration for the one candidate target gNB1. The UE then generates an updated CPC configuration based on the received differential CPC configuration and the stored initial CPC configuration. The updated CPC configuration is thus complete and up to date for being used for a potential CPC to gNB1 in the future.

Although not illustrated, according to a different example, upon successful completion of the CPC to gNB2, the UE may release the initial CPC configuration for gNB2, because it is no longer needed considering that the UE is already successfully connected to said gNB2. However, the CPC configurations for other candidate target cells (in Fig. 24, gNB1) are maintained by the UE.

In the same manner as explained for the improved CHO procedure, the improved CPC procedure can be used also in case there are more than two candidate target cells. The details are provided above with respect to the improved CHO procedure and will not be repeated.

It is also possible that, after a successful CPC, one or more of the candidate target cells do no longer admit the UE, such that the new CPC preparation is rejected. In said case, no differential CPC configuration is prepared for said rejecting target cell.

In the same manner as explained for the improved CHO procedure, a functionality is provided in order to distinguish at the UE between the legacy CPC behaviour (which includes the release of the CPC configurations upon successful completion of the CPC) and the improved CPC behaviour (which includes maintaining the CPC configuration as explained above). The details are provided above with respect to the improved CHO procedure and will not be repeated.

### Improved CPA procedure

After the detailed explanations above with regard to an improved CHO and CPC procedures, in the following an exemplary and simplified implementation of an improved conditional cell addition (CPA) procedure will be explained. The improved CPA procedure can be based on the principles explained above in connection with the improved CHO procedure and will thus not be repeated.

The improved CPA procedure can be understood as being a procedure according to which the UE connects to a candidate target cell (possibly among many candidates) upon fulfilling an execution condition, wherein the candidate target then becomes a primary cell of a secondary group of cells of the UE different from a master group of cells of the UE. The CPA procedure is typically used when the UE enters dual connectivity, e.g., in the process of setting up the secondary cell group and connecting to the primary cell (PSCell) of said secondary cell group. CPA can then also be used to add further SCell(s) to the SCG, or to create another SCG with another PSCell, even though this other SCG is in an inactive state at the beginning.

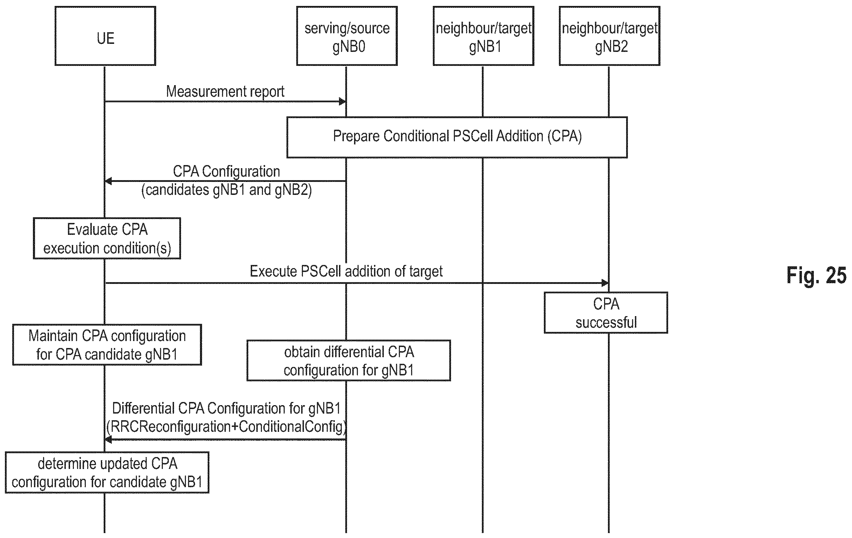

**Fig. 25** illustrates such an exemplary and simplified implementation of an improved conditional cell addition (CPA) procedure, illustrating the exchange of messages between the different participating entities (here the UE, gNB0, gNB1 and gNB2) and the steps performed at these entities.

The improved CPA procedure up to the successful completion of the CPA can be, for example, same as (or similar to) a normal CPA procedure as explained above in connection with Fig. 12.

Important steps and messages for the improved CPA procedure relate to the point in time after the successful completion of the CPA and involve that the UE maintains the initial CPA configurations, at least maintaining the initial CPA configuration for candidate gNB1 (which is the configuration for a prepared but not-performed CPA). Consequently, the initial CPA configurations are not deleted from UE memory at this point of time. This is in contrast to the legacy CPA procedure (e.g., explained in Fig.12), in which the UE releases all the initial CPA configurations upon the successful CPA.

It should also be noted that the UE maintains the connection to its serving cell gNB0 (in contrast with the above-discussed CHO and CPC procedures), wherein the serving cell gNB0 becomes a cell of the master cell group. The target gNB2 becomes the PSCell of the secondary cell group. According to one exemplary implementation of the improved CPA procedure, the source cell can be responsible for obtaining the differential CPA configurations (here only the one of gNB1) and providing the differential CPA configurations to the UE. Different implementations for the step of obtaining the differential CPA configurations have already been explained in connection with the improved CPA procedure and will not be repeated here. In brief, according to the first implementation, the source gNB0 is mainly responsible for determining the differential CPA configurations of all candidate target cells and providing them to the UE. According to the second implementation, the respective candidate target cells are each responsible for determining their own differential CPA configuration parameters and providing them to the source gNB0. According to the third implementation, the new PSCell of the SCG, gNB1, is mainly responsible for determining the differential CPC configuration parameters of all candidate target cells and providing them to the source gNB0.

According to this third implementation, the differential CPA configuration for gNB1 can be transmitted either by the gNB0 (as illustrated in Fig. 25) or by the gNB2 (not illustrated). The (differential) execution condition can then be determined by the gNB0 or gNB2, respectively.

In general, however, the differential CPA configuration may reflect the differences between the new (updated) CPA configuration of gNB1 (after previous CPA) and the initial CPA configuration of gNB1. The differential CPA configuration of a candidate target cell can comprise those CPA configuration parameters and/or execution condition(s) that are different from the initial CPA configuration of said candidate target cell. The differences may involve e.g., updated parameters (e.g., changed values), possibly new parameters, or released parameters (i.e. no longer present in CPC configuration).

In one example, the differential CPA configuration thus does not include some or all elements that have not changed, and can thus be smaller in size.

The UE receives, from the gNB0 or gNB2, the differential CPA configuration for the one candidate target gNB1. The UE then generates an updated CPA configuration based on the received differential CPA configuration and the stored initial CPA configuration. The updated CPA configuration is thus complete and up to date for being used for a potential CPA with gNB1 in the future (e.g., such that the gNB1 becomes an SCell of the SCG or such that the gNB1 becomes an PSCell of another, e.g., inactive, SCG).

Although not illustrated, according to a different example, upon successful completion of the CPA to gNB2, the UE may release the initial CPA configuration for gNB2, because it is no longer needed considering that the UE is already successfully connected to said gNB2. However, the CPA configurations for other candidate target cells (in Fig. 25, gNB1) are maintained by the UE.

In the same manner as explained for the improved CHO procedure, the improved CPA procedure can be used also in case there are more than two candidate target cells. The details are provided above with respect to the improved CHO procedure and will not be repeated.

It is also possible that, after a successful CPA, one or more of the candidate target cells do no longer admit the UE, such that the new CPA preparation is rejected. In said case, no differential CPA configuration is prepared for said rejecting target cell.

In the same manner as explained for the improved CHO procedure, a functionality is provided in order to distinguish at the UE between the legacy CPA behaviour (which includes the release of the CPA configurations upon successful completion of the CPA) and the improved CPA behaviour (which includes maintaining the CPA configuration as explained above). The details are provided above with respect to the improved CHO procedure and will not be repeated.

### Further Aspects

According to a first aspect, a user equipment, is provided that includes the following. A receiver receives, from a source base station, an initial cell configuration of at least one candidate target cell, wherein each initial cell configuration comprises cell configuration parameters of a respective candidate target cell for performing a conditional cell mobility procedure and comprises an execution condition as to when to execute the conditional cell mobility procedure with said respective candidate target cell. A circuitry of the UE, when the execution condition for a target cell among the at least one candidate target cell is fulfilled, executes the conditional cell mobility procedure with said target cell, based on the cell configuration parameters of said target cell. The circuitry maintains the received initial cell configuration of the at least one candidate target cell, upon successful completion of the conditional cell mobility procedure between the UE and said target cell.

According to a second aspect provided in addition to the first aspect, the receiver receives, from a target base station controlling said target cell, a differential cell configuration of one or more candidate target cells among the at least one candidate target cell. The circuitry generates, for each received differential cell configuration, an updated cell configuration based on both the differential cell configuration and the initial cell configuration. In an optional implementation, the differential cell configuration comprises cell configuration parameters and/or execution condition that are different from the initial cell configuration of said respective candidate target cell. In a further optional implementation, the differential cell configuration comprises one or a combination of the following cell configuration parameters:
- a different candidate cell list,
- a different cell ID,
- a different carrier frequency.

In a further optional implementation, the differential cell configuration comprises one or more different sub-conditions of the execution condition, including different measurement quantities or measurement thresholds of the execution condition.

According to a third aspect provided in addition to the second aspect, the circuitry releases the initial cell configuration for those candidate target cells for which no differential cell configuration was received from the target base station.

According to a fourth aspect provided in addition to one of the first to third aspects, wherein maintaining the received initial cell configuration comprises not deleting the received initial cell configuration. In an optional implementation, maintaining the received initial cell configuration further comprises determining that the initial cell configuration is to be maintained upon successful completion of the conditional cell mobility procedure, based on
- pre-configured information stored in the UE, optionally wherein the pre-configured information is received from the source base station,
- information obtained by the UE from said target cell during the conditional cell mobility procedure.

According to a fifth aspect, provided in addition to one of the first to fourth aspects, the conditional cell mobility procedure is one of:
- a conditional handover, according to which the UE disconnects from a source cell of the source base station and connects to a candidate target cell upon fulfilling an execution condition, optionally wherein the source cell and the target cell belong to a same master group of cells of the UE,
- a conditional cell change, according to which the UE disconnects from the source cell and connects to a candidate target cell upon fulfilling an execution condition, wherein the source cell and the candidate target cell belong to a secondary group of cells of the UE different from a master group of cells of the UE, and
- a conditional cell addition, according to which the UE connects to a candidate target cell upon fulfilling an execution condition, wherein the candidate target is a primary cell of a secondary group of cells of the UE different from a master group of cells of the UE.

According to a sixth aspect, provided in addition to one of the first to fifth aspects, the UE performs one or more of the following steps:
stores the received initial cell configuration of the at least one candidate target cell,
determines for each of the at least one candidate target cell, whether an execution condition for executing the conditional cell mobility procedure with the respective candidate target cell is fulfilled,
transmitting a measurement report to the source base station, the measurement report including results of measurement performed by the UE for assisting the source base station in the conditional cell mobility procedure.

In an optional implementation, the cell configuration parameters of the initial cell configuration include one or more of:
- radio resource configuration of the candidate target cell, such as resource blocks, physical channel configuration,
- security configuration of the candidate target cell,
- dual connectivity information, such as master cell group information, secondary cell group information,
- measurement configuration of the candidate target cell,
- mobility configuration.

In a further optional implementation, an execution condition as to when to execute a conditional cell mobility procedure includes one or more sub-conditions, of which one or all have to be fulfilled such that the execution condition is fulfilled. Optionally, a sub-condition relates to the communication quality of one or more of a source cell of the source base station and the candidate target cell relating to the execution condition.

According to a seventh aspect, a base station is provided comprising the following. A transmitter of the base station transmits to a user equipment, UE, an initial cell configuration of at least one candidate target cell. Each initial cell configuration comprises cell configuration parameters of a respective candidate target cell for performing a conditional cell mobility procedure and comprises an execution condition as to when to execute the conditional cell mobility procedure between the UE and said respective candidate target cell. A receiver of the base station receives, from a target base station of a target cell among the at least one candidate target cell, an indication about a successful completion of the conditional cell mobility procedure between the UE and said target cell. After receiving the indication about the successful completion of the conditional cell mobility procedure,
- the transmitter transmits a request, to one or more candidate target cells among those candidate target cells with which the conditional cell mobility procedure was not performed, for requesting cell configuration parameters of the respective candidate target cell for performing the conditional cell mobility procedure between the UE and the respective candidate target cell, and
- the receiver receives, in response to the transmitted request, from the one or more candidate target cells, the requested cell configuration parameters, and
- circuitry of the base station determines for each of the one or more candidate target cells for which the requested and received cell configuration parameters were received, differential cell configuration parameters of the respective candidate target cell, wherein the differential cell configuration parameters comprise those cell configuration parameters that are different from the cell configuration parameters of the initial cell configuration of the respective candidate target cell, and
- the transmitter transmits the differential cell configuration parameters of the one or more candidate target cells to a target base station of said target cell.

According to an eighth aspect provided in addition to seventh aspect, the receiver receives from the target base station of said target cell, configuration parameters of the UE being in connection with the target base station. In an optional implementation, the configuration parameters of the UE comprise one or more of a cell ID of said target cell, a UE ID of the UE being located in said target cell, frequency operation parameters of the UE and an indication as to which initial cell configuration the UE was used for executing the conditional cell mobility procedure. As a further optional implementation, the configuration parameters of the UE are received together with the indication about the successful completion of the conditional cell mobility procedure.

Furthermore, the transmitter, when transmitting the request for requesting the cell configuration parameters to the one or more candidate target cells, also transmits the received configuration parameters of the UE to the one or more candidate target cells.

According to a ninth aspect provided in addition to the seventh or eighth aspects, when the receiver receives from a candidate target cell, in response to the transmitted request, a rejection of the request instead of the requested cell configuration parameters, the base station
- does not determine differential cell configuration parameters,
- does not transmit different cell configuration parameters to said target cell, and
- optionally deletes the initial cell configuration of said rejecting candidate target cell. According to a tenth aspect provided in addition to one of the seventh to ninth aspects, the transmitter transmits to the target base station of said target cell, identification information about the at least one candidate target cell for which initial cell configurations were transmitted to the UE.

According to an eleventh aspect provided in addition to one of the seventh to tenth aspects, before transmitting the initial cell configuration of the at least one candidate target cell,
- the transmitter transmits a request to each of the at least one candidate target cell, for requesting the cell configuration parameters of the respective candidate target cell for performing the conditional cell mobility procedure between the UE and the respective candidate target cell; in an optional implementation, the transmitter transmits, together with the request, configuration parameters of the UE being connected to the base station,
- circuitry determines the execution condition as to when to execute the conditional cell mobility procedure between the UE and the respective candidate target cell.

According to a twelfth aspect, a base station is provided comprising the following. A transmitter of the base station transmits, to a source base station, initial cell configuration parameters for performing a conditional cell mobility procedure between a user equipment, UE, and the base station serving a target cell. Circuitry of the base station performs the conditional cell mobility procedure with the UE, based on the transmitted initial cell configuration parameters, such that the UE is connected to said target cell. Circuitry of the base station obtains differential cell configuration parameters of one or more candidate target cells, for performing the conditional cell mobility procedure between the UE and the respective one or more candidate target cells. The differential cell configuration parameters for a candidate target cell comprises those parameters that are different from initial cell configuration parameters for performing the conditional cell mobility procedure between the UE and the respective candidate target cell. The circuitry determines for each of the one or more candidate target cells, an execution condition as to when to execute the conditional cell mobility procedure between the UE and the respective candidate target cell. The transmitter transmits, to the UE, a differential cell configuration of each of the one or more candidate target cells, wherein the differential cell configuration comprises the determined differential cell configuration parameters for the one or more candidate target cells and the determined execution condition.

According to a thirteenth aspect, provided in addition to the twelfth aspect, the obtaining of the differential cell configuration parameters for the one or more candidate target cells comprises receiving the different cell configuration parameters from the source base station.

According to a fourteenth aspect, provided in addition to the twelfth or thirteenth aspects, the obtaining of the differential cell configuration parameters of the one or more candidate target cells comprises:
- receiving from the source base station, identification information about at least one candidate target cell of the conditional cell mobility procedure to be performed between the UE and the respective candidate target cell,
- for each of the identified at least one candidate target cell,
   - transmitting a request for requesting cell configuration parameters for performing the conditional cell mobility procedure between the UE and the respective candidate target cell,
   - receiving, in response to the transmitted request, from the respective candidate target cell, the differential cell configuration parameters of the respective candidate target cell.

According to a fifteenth aspect, provided in addition to one of the twelfth to fourteenth aspects, the obtaining of the differential cell configuration parameters for the one or more candidate target cells comprises:
- receiving from the source base station, identification information about at least one candidate target cell and receiving initial configuration parameters for performing the conditional cell mobility procedure between the UE and the respective candidate target cell before the execution of the conditional cell mobility procedure to the base station,
- for each of the identified least one candidate target cell,
   - transmitting to the respective candidate target cell, a request for requesting cell configuration parameters for performing the conditional cell mobility procedure between the UE and the respective candidate target cell,
   - receiving, in response to the transmitted request, from the respective candidate target cell, the requested cell configuration parameters of the respective candidate target cell,
   - determining the differential cell configuration parameters of the respective candidate target cell, based on the requested cell configuration parameters received from the respective candidate target cell and based on the initial configuration parameters received from the source base station.

According to a sixteenth aspect, provided in addition to one of the twelfth to fifteenth aspects, the transmitter transmits an indication, to the source base station, about the successful completion of the conditional cell mobility procedure between the UE and the base station.

In an optional implementation, the transmitter transmits, to the source base station, configuration parameters of the UE being in connection with the base station. Further optionally, the configuration parameters of the UE comprise one or more of a cell ID of said target cell, a UE ID of the UE being connected to the base station, frequency operation parameters of the UE and an indication as to which initial cell configuration of the UE was used for executing the conditional cell mobility procedure. As a further option, the configuration parameters of the UE are transmitted together with the indication about the successful completion of the conditional cell mobility procedure.

According to a seventeenth aspect, provided in addition to the twelfth to 16^{th} aspects, the transmitter transmits to another base station, initial cell configuration parameters for performing a conditional cell mobility procedure between another UE and the base station. The receiver receives a request from the other base station, for requesting cell configuration parameters for performing the conditional cell mobility procedure between the other UE and the base station; optionally, the receiver also receives configuration parameters of the UE. The circuitry determines updated cell configuration parameters for performing a conditional cell mobility procedure between the other UE and the base station. The circuitry determines differential cell configuration parameters, based on both the initial cell configuration parameters and the updated cell configuration parameters. The different cell configuration parameters comprises those parameters that are different from the initial cell configuration parameters and the updated cell configuration parameters.

According to a eighteenth aspect, a method is provided comprising the following steps performed by a user equipment, UE:
receiving, from a source base station, an initial cell configuration of at least one candidate target cell, wherein each initial cell configuration comprises cell configuration parameters of a respective candidate target cell for performing a conditional cell mobility procedure between the UE and said respective candidate target cell and comprises an execution condition as to when to execute the conditional cell mobility procedure with said respective candidate target cell,
when the execution condition for a target cell among the at least one candidate target cell is fulfilled, executing the conditional cell mobility procedure with said target cell, based on the cell configuration parameters of said target cell, and
maintaining the received initial cell configuration of the at least one candidate target cell, upon successful completion of the conditional cell mobility procedure between the UE and said target cell.

According to a nineteenth aspect, a method is provided comprising the following steps performed by a base station:
transmitting to a user equipment, UE, an initial cell configuration of at least one candidate target cell, wherein each initial cell configuration comprises cell configuration parameters of a respective candidate target cell for performing a conditional cell mobility procedure between the UE and said respective candidate target cell and comprises an execution condition as to when to execute the conditional cell mobility procedure between the UE and said respective candidate target cell,
receiving, from a target base station of a target cell among the at least one candidate target cell, an indication about a successful completion of the conditional cell mobility procedure between the UE and said target cell,
after receiving the indication about the successful completion of the conditional cell mobility procedure,
   - transmitting a request, to one or more candidate target cells among those candidate target cells with which the conditional cell mobility procedure was not performed, for requesting cell configuration parameters of the respective candidate target cell for performing the conditional cell mobility procedure between the UE and the respective candidate target cell, and
   - receiving, in response to the transmitted request, from the one or more candidate target cells, the requested cell configuration parameters, and
   - determining for each of the one or more candidate target cells for which the requested and received cell configuration parameters were received, differential cell configuration parameters of the respective candidate target cell, wherein the differential cell configuration parameters comprise those cell configuration parameters that are different from the cell configuration parameters of the initial cell configuration of the respective candidate target cell, and
   - transmitting the differential cell configuration parameters of the one or more candidate target cells to a target base station of said target cell.

According to a 20^{th} aspect, a message is provided comprising the following steps performed by a base station:
transmitting, to a source base station, initial cell configuration parameters for performing a conditional cell mobility procedure between a user equipment, UE, and the base station serving a target cell,
performing the conditional cell mobility procedure with the UE, based on the transmitted initial cell configuration parameters, such that the UE is connected to said target cell
obtaining differential cell configuration parameters of one or more candidate target cells, usable for performing the conditional cell mobility procedure between the UE and the respective one or more candidate target cells, wherein the differential cell configuration parameters for a candidate target cell comprises those parameters that are different from initial cell configuration parameters for performing the conditional cell mobility procedure between the UE and the respective candidate target cell,
determining for each of the one or more candidate target cells, an execution condition as to when to execute the conditional cell mobility procedure between the UE and the respective candidate target cell,
transmitting, to the UE, a differential cell configuration of each of the one or more candidate target cells, wherein the differential cell configuration comprises the determined differential cell configuration parameters for the one or more candidate target cells and the determined execution condition.

According to a 21^{st} aspect, an integrated circuit is provided, which , controls a process of a user equipment, UE, the process comprising the following steps performed by the UE:
receiving, from a source base station, an initial cell configuration of at least one candidate target cell, wherein each initial cell configuration comprises cell configuration parameters of a respective candidate target cell for performing a conditional cell mobility procedure between the UE and said respective candidate target cell and comprises an execution condition as to when to execute the conditional cell mobility procedure with said respective candidate target cell,
when the execution condition for a target cell among the at least one candidate target cell is fulfilled, executing the conditional cell mobility procedure with said target cell, based on the cell configuration parameters of said target cell, and
maintaining the received initial cell configuration of the at least one candidate target cell, upon successful completion of the conditional cell mobility procedure between the UE and said target cell.

According to a 22^{nd} aspect, an integrated circuit is provided, which controls a process of a base station, the process comprising the following steps performed by the base station:
transmitting to a user equipment, UE, an initial cell configuration of at least one candidate target cell, wherein each initial cell configuration comprises cell configuration parameters of a respective candidate target cell for performing a conditional cell mobility procedure between the UE and said respective candidate target cell and comprises an execution condition as to when to execute the conditional cell mobility procedure between the UE and said respective candidate target cell,
receiving, from a target base station of a target cell among the at least one candidate target cell, an indication about a successful completion of the conditional cell mobility procedure between the UE and said target cell,
after receiving the indication about the successful completion of the conditional cell mobility procedure,
   - transmitting a request, to one or more candidate target cells among those candidate target cells with which the conditional cell mobility procedure was not performed, for requesting cell configuration parameters of the respective candidate target cell for performing the conditional cell mobility procedure between the UE and the respective candidate target cell, and
   - receiving, in response to the transmitted request, from the one or more candidate target cells, the requested cell configuration parameters, and
   - determining for each of the one or more candidate target cells for which the requested and received cell configuration parameters were received, differential cell configuration parameters of the respective candidate target cell, wherein the differential cell configuration parameters comprise those cell configuration parameters that are different from the cell configuration parameters of the initial cell configuration of the respective candidate target cell, and
   - transmitting the differential cell configuration parameters of the one or more candidate target cells to a target base station of said target cell.

According to a 23^{rd} aspect, an integrated circuit is provided, which controls a process of a base station, the process comprising the following steps performed by the base station:
transmitting, to a source base station, initial cell configuration parameters for performing a conditional cell mobility procedure between a user equipment, UE, and the base station serving a target cell,
performing the conditional cell mobility procedure with the UE, based on the transmitted initial cell configuration parameters, such that the UE is connected to said target cell
obtaining differential cell configuration parameters of one or more candidate target cells, for performing the conditional cell mobility procedure between the UE and the respective one or more candidate target cells, wherein the differential cell configuration parameters for a candidate target cell comprises those parameters that are different from initial cell configuration parameters for performing the conditional cell mobility procedure between the UE and the respective candidate target cell,
determining for each of the one or more candidate target cells, an execution condition as to when to execute the conditional cell mobility procedure between the UE and the respective candidate target cell,
transmitting, to the UE, a differential cell configuration of each of the one or more candidate target cells, wherein the differential cell configuration comprises the determined differential cell configuration parameters for the one or more candidate target cells and the determined execution condition.

### Further Variants, including Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC (integrated circuit), a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (loT).

The communication may include exchanging data through, for example, a cellular system, a wireless LAN system, a satellite system, etc., and various combinations thereof.

The communication apparatus may comprise a device such as a controller or a sensor, which is coupled to a communication device performing a function of communication described in the present disclosure. For example, the communication apparatus may comprise a controller or a sensor that generates control signals or data signals, which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

## Claims

1. A user equipment, UE, comprising:
a receiver, which in operation, receives, from a source base station, an initial cell configuration of at least one candidate target cell, wherein each initial cell configuration comprises cell configuration parameters of a respective candidate target cell for performing a conditional cell mobility procedure and comprises an execution condition as to when to execute the conditional cell mobility procedure with said respective candidate target cell,
a circuitry, which in operation and when the execution condition for a target cell among the at least one candidate target cell is fulfilled, executes the conditional cell mobility procedure with said target cell, based on the cell configuration parameters of said target cell, and
the circuitry, which in operation, maintains the received initial cell configuration of the at least one candidate target cell, upon successful completion of the conditional cell mobility procedure between the UE and said target cell.

2. The UE according to claim 1, wherein the receiver, when in operation, receives, from a target base station controlling said target cell, a differential cell configuration of one or more candidate target cells among the at least one candidate target cell,
the circuitry, when in operation, generates, for each received differential cell configuration, an updated cell configuration based on both the differential cell configuration and the initial cell configuration, and
optionally wherein the differential cell configuration comprises cell configuration parameters and/or execution condition that are different from the initial cell configuration of said respective candidate target cell,
optionally wherein the differential cell configuration comprises one or a combination of the following cell configuration parameters:
• a different candidate cell list,
• a different cell ID,
• a different carrier frequency
optionally wherein the differential cell configuration comprises one or more different sub-conditions of the execution condition, including different measurement quantities or measurement thresholds of the execution condition.

3. The UE according to claim 2, wherein the circuitry, when in operation, releases the initial cell configuration for those candidate target cells for which no differential cell configuration was received from the target base station.

4. The UE according to any one of claims 1 to 3, wherein maintaining the received initial cell configuration comprises not deleting the received initial cell configuration,
optionally wherein maintaining the received initial cell configuration further comprises determining that the initial cell configuration is to be maintained upon successful completion of the conditional cell mobility procedure, based on
• pre-configured information stored in the UE, optionally wherein the pre-configured information is received from the source base station,
• information obtained by the UE from said target cell during the conditional cell mobility procedure.

5. The UE according to any one of claims 1 to 4, wherein the conditional cell mobility procedure is one of:
• a conditional handover, according to which the UE disconnects from a source cell of the source base station and connects to a candidate target cell upon fulfilling an execution condition, optionally wherein the source cell and the target cell belong to a same master group of cells of the UE,
• a conditional cell change, according to which the UE disconnects from the source cell and connects to a candidate target cell upon fulfilling an execution condition, wherein the source cell and the candidate target cell belong to a secondary group of cells of the UE different from a master group of cells of the UE, and
• a conditional cell addition, according to which the UE connects to a candidate target cell upon fulfilling an execution condition, wherein the candidate target is a primary cell of a secondary group of cells of the UE different from a master group of cells of the UE.

6. A base station comprising:
a transmitter, which in operation, transmits to a user equipment, UE, an initial cell configuration of at least one candidate target cell, wherein each initial cell configuration comprises cell configuration parameters of a respective candidate target cell for performing a conditional cell mobility procedure and comprises an execution condition as to when to execute the conditional cell mobility procedure between the UE and said respective candidate target cell,
a receiver, which in operation, receives, from a target base station of a target cell among the at least one candidate target cell, an indication about a successful completion of the conditional cell mobility procedure between the UE and said target cell,
wherein, after receiving the indication about the successful completion of the conditional cell mobility procedure,
• the transmitter, when in operation, transmits a request, to one or more candidate target cells among those candidate target cells with which the conditional cell mobility procedure was not performed, for requesting cell configuration parameters of the respective candidate target cell for performing the conditional cell mobility procedure between the UE and the respective candidate target cell, and
• the receiver, when in operation, receives, in response to the transmitted request, from the one or more candidate target cells, the requested cell configuration parameters, and
• circuitry of the base station, when in operation, determines for each of the one or more candidate target cells for which the requested and received cell configuration parameters were received, differential cell configuration parameters of the respective candidate target cell, wherein the differential cell configuration parameters comprise those cell configuration parameters that are different from the cell configuration parameters of the initial cell configuration of the respective candidate target cell, and
• the transmitter, when in operation, transmits the differential cell configuration parameters of the one or more candidate target cells to a target base station of said target cell.

7. The base station according to claim 6, wherein the receiver, when in operation, receives from the target base station of said target cell, configuration parameters of the UE being in connection with the target base station, optionally wherein the configuration parameters of the UE comprise one or more of a cell ID of said target cell, a UE ID of the UE being located in said target cell, frequency operation parameters of the UE and an indication as to which initial cell configuration the UE was used for executing the conditional cell mobility procedure, optionally wherein the configuration parameters of the UE are received together with the indication about the successful completion of the conditional cell mobility procedure, and
wherein the transmitter, when in operation and when transmitting the request for requesting the cell configuration parameters to the one or more candidate target cells, also transmits the received configuration parameters of the UE to the one or more candidate target cells.

8. The base station according to claim 6 or 7, wherein when the receiver receives from a candidate target cell, in response to the transmitted request, a rejection of the request instead of the requested cell configuration parameters, the base station, when in operation,
∘ does not determine differential cell configuration parameters,
∘ does not transmit different cell configuration parameters to said target cell, and
∘ optionally deletes the initial cell configuration of said rejecting candidate target cell.

9. The base station according to any one of claims 6 to 8, wherein the transmitter, when in operation, transmits to the target base station of said target cell, identification information about the at least one candidate target cell for which initial cell configurations were transmitted to the UE.

10. A base station comprising:
a transmitter, which in operation, transmits, to a source base station, initial cell configuration parameters for performing a conditional cell mobility procedure between a user equipment, UE, and the base station serving a target cell,
circuitry, which in operation, performs the conditional cell mobility procedure with the UE, based on the transmitted initial cell configuration parameters, such that the UE is connected to said target cell,
circuitry, which in operation, obtains differential cell configuration parameters of one or more candidate target cells, for performing the conditional cell mobility procedure between the UE and the respective one or more candidate target cells, wherein the differential cell configuration parameters for a candidate target cell comprises those parameters that are different from initial cell configuration parameters for performing the conditional cell mobility procedure between the UE and the respective candidate target cell,
the circuitry, which in operation, determines for each of the one or more candidate target cells, an execution condition as to when to execute the conditional cell mobility procedure between the UE and the respective candidate target cell,
the transmitter, which in operation, transmits, to the UE, a differential cell configuration of each of the one or more candidate target cells, wherein the differential cell configuration comprises the determined differential cell configuration parameters for the one or more candidate target cells and the determined execution condition.

11. The base station according to claim 10, wherein the obtaining of the differential cell configuration parameters for the one or more candidate target cells comprises receiving the different cell configuration parameters from the source base station.

12. The base station according to claims 10 or 11, wherein the obtaining of the differential cell configuration parameters of the one or more candidate target cells comprises:
• receiving from the source base station, identification information about at least one candidate target cell of the conditional cell mobility procedure to be performed between the UE and the respective candidate target cell,
• for each of the identified at least one candidate target cell,
∘ transmitting a request for requesting cell configuration parameters for performing the conditional cell mobility procedure between the UE and the respective candidate target cell,
∘ receiving, in response to the transmitted request, from the respective candidate target cell, the differential cell configuration parameters of the respective candidate target cell.

13. The base station according to any one of claims 10 to 12, wherein the obtaining of the differential cell configuration parameters for the one or more candidate target cells comprises:
• receiving from the source base station, identification information about at least one candidate target cell and receiving initial configuration parameters for performing the conditional cell mobility procedure between the UE and the respective candidate target cell before the execution of the conditional cell mobility procedure to the base station,
• for each of the identified least one candidate target cell,
∘ transmitting to the respective candidate target cell, a request for requesting cell configuration parameters for performing the conditional cell mobility procedure between the UE and the respective candidate target cell,
∘ receiving, in response to the transmitted request, from the respective candidate target cell, the requested cell configuration parameters of the respective candidate target cell,
∘ determining the differential cell configuration parameters of the respective candidate target cell, based on the requested cell configuration parameters received from the respective candidate target cell and based on the initial configuration parameters received from the source base station.

14. The base station according to any one of claims 10 to 13, wherein the transmitter, when in operation, transmits an indication, to the source base station, about the successful completion of the conditional cell mobility procedure between the UE and the base station,
optionally wherein the transmitter, when in operation, transmits, to the source base station, configuration parameters of the UE being in connection with the base station, optionally wherein the configuration parameters of the UE comprise one or more of a cell ID of said target cell, a UE ID of the UE being connected to the base station, frequency operation parameters of the UE and an indication as to which initial cell configuration of the UE was used for executing the conditional cell mobility procedure, optionally wherein the configuration parameters of the UE are transmitted together with the indication about the successful completion of the conditional cell mobility procedure.

15. The base station according to any one of claims 10 to 14, wherein the transmitter, when in operation, transmits to another base station, initial cell configuration parameters for performing a conditional cell mobility procedure between another UE and the base station,
wherein the receiver, when in operation, receives a request from the other base station, for requesting cell configuration parameters for performing the conditional cell mobility procedure between the other UE and the base station, optionally wherein the receiver also receives configuration parameters of the UE,
wherein the circuitry, when in operation, determines updated cell configuration parameters for performing a conditional cell mobility procedure between the other UE and the base station, and
the circuitry, when in operation, determines differential cell configuration parameters, based on both the initial cell configuration parameters and the updated cell configuration parameters, wherein the different cell configuration parameters comprises those parameters that are different from the initial cell configuration parameters and the updated cell configuration parameters.
